# EUROPÄISCHE PATENTSCHRIFT

(11) **EP 4 168 336 B1**
(45) Veröffentlichungstag und Bekanntmachung des Hinweises auf die Patenterteilung: **07.05.2025**
(21) Anmeldenummer: 21733794.8
(22) Anmeldetag: 16.06.2021
(51) Int. Cl.: B65G 53/66, B65G 69/12

(54) **TRANSPORTVORRICHTUNG MIT EINEM ULTRASCHALLGENERATOR UND BETRIEBSVERFAHREN**
DEVICE WITH AN ULTRASONIC GENERATOR AND METHOD OF OPERATING SAME
DISPOSITIF DOTÉ D'UN GÉNÉRATEUR D'ULTRASONS ET PROCÉDÉ DE FONCTIONNEMENT

(30) Priorität: 19.06.2020 EP 20181038; 24.11.2020 EP 20209580; 12.03.2021 EP 21162463
(43) Veröffentlichungstag der Anmeldung: 26.04.2023
(73) Patentinhaber: A O Ideas GmbH, 8581 Schocherwil (CH)
(72) Erfinder: CARRASCO, César, 8581 Schocherswil (CH)
(74) Vertreter: Rutz & Partner
(86) Internationale Anmeldenummer: PCT/EP2021/066319
(87) Internationale Veröffentlichungsnummer: WO 2021/255132

(56) Entgegenhaltungen:
- DE-A1- 102006 037 638
- DE-A1- 102006 047 592
- DE-A1- 102012 108 529
- JP-A- 2003 145 051

## Beschreibung

Die Erfindung betrifft eine mit wenigstens einem Ultraschallgenerator ausgerüstete Transportvorrichtung, die für den Transport von pulverförmigem oder körnigem Material vorgesehen ist, sowie ein Betriebsverfahren für diese Transportvorrichtung.

In Verarbeitungsprozessen insbesondere der chemischen Industrie, der Baustoffindustrie, der pharmazeutischen Industrie und der Nahrungsmittelindustrie werden zu verarbeitende Materialien transportiert und einer Bearbeitung unterworfen. Pulverförmige oder körnige Materialien werden dosiert, gemischt oder gesiebt. Bei all diesen Prozessen werden die Materialien und Materialkomponenten gefördert oder transportiert. Diese Materialien werden nachstehend daher als Prozessmaterial bezeichnet
In Siebvorrichtungen wird das Prozessmaterial, z.B. ein Feststoffgemisch, in Fraktionen mit unterschiedlichen Korngrössen aufgeteilt. Das Prozessmaterial wird dem Sieb zugeführt und die durch Siebung gewonnenen Fraktionen unterschiedlicher Korngrösse werden weggeführt. Die Siebvorrichtung ist daher eine Transportvorrichtung mit einer besonderen Funktion, nämlich einer Siebfunktion oder Trennfunktion.

In Mischvorrichtungen werden Materialkomponenten zu einem Mischgut gemischt. Komponenten eines Prozessmaterials werden zugeführt und das Mischgut oder gemischte Prozessmaterial wird weggeführt. Die Mischvorrichtung ist daher eine Transportvorrichtung mit einer besonderen Funktion, nämlich einer Mischfunktion.

In Dosiervorrichtungen wird ein Prozessmaterial dosiert abgegeben. Auch Dosiervorrichtungen sind somit Transportvorrichtungen.

Der Transport eines Prozessmaterials durch eine Transportvorrichtung ist dabei oft mit Schwierigkeiten verbunden. Das Prozessmaterial, welches entlang einem teilweise geöffneten oder in sich geschlossenen Transportrahmen geführt wird, kann möglicherweise am Transportrahmen anhaften, Klumpen bilden, sich nicht gleichmässig verteilen, oder nicht gleichmässig gefördert werden. Der Transportrahmen besteht aus Metall und umfasst oder hält das Prozessmaterial, sodass dieses entlang oder durch den Transportrahmen gefördert werden kann. Der Transportrahmen kann beispielsweise ein Kanal, ein Rohr oder ein Behälter sein. Im Transportrahmen kann ein Funktionselement, wie ein Sieb, gehalten sein, welches zur Bearbeitung des Prozessmaterials vorgesehen ist.

Transportvorrichtungen dieser Art liefern hinsichtlich Effizienz und Qualität z.B. beim Sieben, Mischen, Dosieren, oder Filtern oft nicht die erwünschten Ergebnisse. Die Trennung oder Durchmischung von Materialkomponenten oder die Abgabe des Prozessmaterials erfolgt regelmässig nicht mit der gewünschten Qualität, Präzision und/oder mit dem gewünschten Durchsatz. Die Qualität kann durch die Zuschaltung weiterer Prozessstufen in Serie erhöht werden. Der Durchsatz kann durch grössere Anlagen oder durch Parallelschaltung mehrerer Anlagen vergrössert werden. Die eine präzisere Dosierung wird durch aufwändigere Anlagen erzielt.

Weiterhin ist zu beachten, dass Transportvorrichtungen dieser Art oft einen hohen Wartungsaufwand erfordern. Das Prozessmaterial kann an den Wänden des Transportrahmens anhaften oder den Siebbelag oder ein Filter verstopfen, sodass diese frühzeitig gewartet oder ausgetauscht werden müssen.

Aus der WO2018219840A1 ist eine Siebvorrichtung mit einem Sieb bekannt, bei der zur Verminderung der beschriebenen Probleme Schwingungen über den Siebrahmen oder Transportrahmen auf den Siebbelag übertragen werden. Dazu wird ein Ultraschallgenerator durch einen Kopplungsstab mit dem Transportrahmen verbunden. Ultraschallwellen gelangen über den Transportrahmen auf den Siebbelag und können die Partikel des Prozessmaterials in Bewegung versetzen, sodass es idealerweise am Transportrahmen und Siebbelag nicht anhaften kann. In der Praxis werden diesbezüglich insbesondere dann Verbesserungen festgestellt, wenn genügend Ultraschallleistung auf den Transportrahmen übertragen werden kann. Dabei ist zu beachten, dass die Abgabe hoher Leistungen normalerweise unerwünscht ist, da im Bereich der Verbindung des Kopplungsstabs mit dem Transportrahmen hohe Temperaturen auftreten können, welche die Verbindungsstelle beschädigen können. Die Wirkung der eingekoppelten Ultraschallwellen entfaltet sich daher im Wesentlichen im Bereich der Verbindung des Kopplungsstabs mit dem Transportrahmen, weshalb dessen Positionierung entsprechend zu wählen ist.

Zu beachten ist ferner, dass die Verbindung des Kopplungsstabs mit dem Transportrahmen nur von entsprechend geschultem Personal vollzogen werden kann. Sofern die Verbindung nicht optimal ist, sind die Resultate unbefriedigend. Ferner können sich fehlerhafte Verbindungen erwärmen, sodass sie bei Einkopplung höhere Leistungen zerstört werden.

Aus der JP2003145051A ist eine gattungsgemäße Transportvorrichtung bekannt, die den Oberbegriff des Anspruchs 1 zeigt.

Der vorliegenden Erfindung liegt daher die Aufgabe zugrunde, eine verbesserte Transportvorrichtung mit einem Ultraschallgenerator sowie ein Betriebsverfahren für diese verbesserte Transportvorrichtung zu schaffen.

Erfindungsgemäss sollen Transportvorrichtungen verbessert werden, die zur Förderung und/oder Bearbeitung eines Prozessmaterials geeignet und dazu gegebenenfalls mit einem oder mehreren Funktionselementen, wie einem Siebbelag oder einem Filter, ausgerüstet sind.

In erfindungsgemässen Transportvorrichtungen sollen Arbeitsprozesse zur Bearbeitung des Prozessmaterials, wie die Förderung und/oder die Siebung und/oder Filterung, und/oder Mischung und/oder Verteilung des Prozessmaterials, verbessert werden. Insbesondere sollen die Qualität und die Präzision dieser Arbeitsprozesse verbessert werden. Bei der Siebung soll eine präzisere Trennung, bei der Mischung eine bessere Durchmischung und bei der Dosierung soll eine präzisere Mengenabgabe erzielt werden.

Die Förderung soll derart verbessert werden, dass eine gleichmässigere Förderung und gegebenenfalls gleichmässigere Verteilung erzielt werden kann. Vorzugsweise soll die Transportrichtung, in der das Prozessmaterial gefördert wird, in einfacher Weise änderbar sein. Die Förderung und Abgabe des Prozessmaterials sollen vorzugsweise an ausgewählten Stellen möglich sein.

Ferner soll der Durchsatz durch die Transportvorrichtung ohne Vergrösserung der Anlage oder Zufuhr höherer Leistung verbessert werden.

Die Transportvorrichtung soll zudem einfach zusammengebaut werden können, so dass auch bereits in Betrieb stehende Anlagen und Transportvorrichtungen erfindungsgemäss weitergebildet werden können.

Weiterhin soll die Transportvorrichtung einfach und kostengünstig gefertigt werden können.

Bei erfindungsgemässen Transportvorrichtungen soll ferner der Wartungsaufwand signifikant abgesenkt werden. Materialanhaftungen, welche zu Materialverlusten führen, die Materialqualität beeinträchtigen und gegebenenfalls den Betrieb der der Transportvorrichtung stören, sollen grossflächig und nicht nur punktuell vermieden werden.

Diese Aufgabe wird mit einer Transportvorrichtung und einem Betriebsverfahren gelöst, welche die in Anspruch 1 bzw. 11 angegebenen Merkmale aufweisen. Vorteilhafte Ausgestaltungen der Erfindung sind in weiteren Ansprüchen angegeben.

Die Transportvorrichtung, die für den Transport oder die Förderung von pulverförmigem oder körnigem Prozessmaterial vorgesehen ist, umfasst einen aus Metall gefertigten, offenen oder in sich geschlossenen Transportrahmen, der für den Transport oder die Förderung des Prozessmaterials vorgesehen ist, der von einer Tragvorrichtung gehalten ist und der mit einer Ultraschallvorrichtung verbunden ist, die einen Ultraschallgenerator, einen mit dem Ultraschallgenerator verbundenen Ultraschallwandler und einen mit dem Ultraschallwandler verbundenen Kopplungsstab umfasst, der ein frontseitiges Endstück und ein rückseitiges Endstück aufweist.

Erfindungsgemäss ist vorgesehen, dass ein aus Metall gefertigter flächiger Verteilkörper vorgesehen ist, der eine Oberseite, eine Unterseite, eine Rückseite und peripher wenigstens eine Anschlussseite aufweist, dass das rückseitige Endstück des Kopplungsstabs mit dem Ultraschallwandler verbunden und das frontseitige Endstück des Kopplungsstabs mit der Rückseite, der Oberseite oder der Unterseite des vorzugsweise plattenförmigen Verteilkörpers verschweisst ist, und dass die wenigstens eine Anschlussseite des Verteilkörpers mit dem wenigstens einen Transportrahmen einstückig verbunden oder verschweisst ist.

Der Transportrahmen ist normalerweise zumindest teilweise aus Metall gefertigt, sodass Ultraschallwellen optimal vom Verteilkörper auf den Transportrahmen übertragen werden. Ein in sich geschlossener Transportrahmen ist beispielsweise ein Konus oder ein Rohr, das z.B. einen runden oder polygonalen Querschnitt aufweist und durch das Prozessgut hindurch geführt wird. Ein offener Transportrahmen ist beispielsweise eine ebene oder beliebig geformte Platte oder ein Belag, auf dem sich das Prozessgut verteilen kann. Der in sich geschlossene oder offene Transportrahmen kann ferner Öffnungen oder Poren aufweisen und z.B. einen Siebbelag bilden, sodass sich das Prozessgut nicht nur entlang dem Transportrahmen bewegen sondern auch durch diesen hindurch treten kann. Ein Transportrahmen kann daher verschiedene Funktionen erfüllen, wie die Förderung und/oder Siebung und/oder Trennung und/oder Durchmischung und/oder Vermischung oder Zerstäubung des Prozessmaterials. Zur Realisierung dieser Funktionen kann die Ausgestaltung und/oder die Ausrichtung des Transportrahmens in Förderrichtung des Prozessguts ändern. Beispielsweise können sich der Durchmesser der Öffnungen des Siebbelags in Förderrichtung verändern. Dem Transportrahmen kann an einer oder mehreren Stellen ein Prozessgut oder unterschiedliche Prozessgüter zugeführt werden.

Der Verteilkörper ist vorzugsweise plattenförmig ausgebildet. Der flächige Verteilkörper kann in wenigstens einer Dimension beliebige Formen aufweisen. Der Verteilkörper kann in einer Ebene ausgerichtet sein oder beliebige regelmässige oder unregelmässige Bewegungen oder Krümmungen aufweisen. Der Verteilkörper kann somit eine ebene Platte oder flächiger geometrischer Körper, wie ein Zylinder oder ein Segment davon sein. Der Verteilkörper kann auch eine beliebige Welligkeit an der Oberseite und/oder der Unterseite und/oder der Frontseite oder Rückseite aufweisen.

Durch den Verteilkörper wird Ultraschallenergie, die vom Kopplungsstab punktuell in den Verteilkörper eingeleitet wird, entlang einem langgestreckten Einkopplungsquerschnitt auf den Transportrahmen übertragen. Der Einkopplungsquerschnitt ist beispielsweise rechteckförmig mit einer Höhe entsprechend der Plattendicke oder mit einem durchgehenden oder ununterbrochenen unregelmässigen Verlauf. Mit der erfindungsgemässen Transportvorrichtung kann dadurch vorteilhaft auf ein Prozessmaterial eingewirkt werden, welches über den Transportrahmen hinweg oder durch den Transportrahmen hindurch transportiert und gegebenenfalls bearbeitet, z.B. gesiebt, gemischt, mit einem Stoff beaufschlagt oder in seiner Struktur verändert wird. Das Prozessmaterial liegt beispielsweise als Pulver oder Granulat oder als körniges Gemisch vor. Durch geeignete Einkopplung von Ultraschallenergie können Partikel vereinzelt und vorteilhafter gefördert und bearbeitet werden. Insbesondere kann durch gezielte Einkopplung von Ultraschallenergie auch die Förderrichtung bestimmt werden, sodass Prozessmaterial in eine Richtung gefördert oder gleichmässig verteilt wird. Anstatt den Kopplungsstab direkt mit dem Transportrahmen zu verbinden und die Ultraschallenergie direkt in den Transportrahmen einzukoppeln wird die Ultraschallenergie über den Verteilkörper in den Transportrahmen eingekoppelt, was mit zahlreichen Vorteilen verbunden ist.

Der wenigstens eine Kopplungsstab und der Verteilkörper können aus gleichen oder unterschiedlichen Metallen, wie Eisen, Stahl, Kupfer, Aluminium oder Titan gefertigt werden. Der Kopplungsstab weist vorzugsweise einen runden oder polygonalen Querschnitt auf und ist mit dem zugehörigen Endstück gegenüber der Rückseite, Oberseite oder der Unterseite des Verteilkörpers geneigt oder senkrecht dazu ausgerichtet. Der Kopplungsstab ist vorzugsweise gekrümmt oder gebogen.

Der Verteilkörper ist flächig bzw. erstreckt sich entlang einer ebenen oder gekrümmten Fläche, sodass er frontseitig entlang einem Streifen bzw. dem entsprechenden Querschnittsverlauf, der vorzugsweise Unterbrechungen aufweist, mit dem Transportrahmen verbunden ist.

Der Verteilkörper kann eine Metallplatte mit homogenem Querschnitt sein oder aus miteinander verbundenen Elementen, wie Stabelementen gebildet sein. Der Verteilkörper kann auch eine Gitterplatte mit Stäben sein.

In vorzugsweisen Ausgestaltungen weist der Verteilkörper eine Welligkeit auf, sodass die Intensität der Einkopplung der Ultraschallenergie entlang der Anschlussseite des Verteilkörpers in den Transportrahmen entsprechend dieser Welligkeit verläuft, was zu einer Verwirbelung und Auflockerung der transportierten Partikel des Prozessmaterials führt.

Die Anschlussseite wird vorzugsweise durch eine in der Regel relativ schmale Stirnseite des plattenförmigen Kopplungskörpers und gegebenenfalls einen daran angrenzenden Rand gebildet, da die Stirnseite allein für das Erstellen der Schweissverbindung normalerweise nicht genügt.

Der Verteilkörper wirkt als Transformator, der über den Kopplungsstab eintreffende Ultraschallwellen transformiert, verteilt und mit erhöhter Amplitude in den Transportrahmen einkoppelt. Die Transformation erfolgt hinsichtlich des Unterschieds zwischen dem Kopplungsstab, der einen runden oder polygonalen Querschnitt aufweist, und dem flächigen Verteilkörper.

Die Anschlussseite des flächigen Verteilkörpers schliesst, gegebenenfalls mit Lücken oder Ausnehmungen, an den Transportrahmen an, sodass Ultraschallenergie nicht punktuell, sondern entlang eines Streifens oder Querschnitts, welcher von der Dicke des Verteilkörpers und der Breite der Schweissnaht abhängig ist, in den Transportrahmen eingekoppelt wird.

Durch Vermeidung einer punktuellen Einkopplung in den Transportrahmen wird eine punktuelle Erwärmung vermieden, die zu einer Zerstörung der Verbindungsstelle oder Schweissstelle führen kann. Es kann somit mehr Energie in den Transportrahmen eingekoppelt werden, ohne dass Schäden zu befürchten sind. Die Verbindungsstelle erstreckt sich über die Anschlussseite des Verteilkörpers, weshalb Wärmeenergie, die an der Schweissstellen oder Schweissnaht resultiert, einerseits vom Transportrahmen und andererseits vom Transportrahmen absorbiert wird. Selbst bei der Einkopplung von hohen Leistungen tritt somit keine übermässige Erwärmung auf, welche die Verbindungsstelle beschädigen könnte.

Bei punktueller Ankopplung des Kopplungsstabs direkt an den Transportrahmen, welche mit den oben beschriebenen Nachteilen verbunden ist, besteht daher die Gefahr einer Zerstörung. Die Verschweissung ist daher von geübtem Personal mit höchster Qualität auszuführen. Dieses Problem wird bei der erfindungsgemässen Lösung vermieden.

Der Kopplungsstab und der Verteilkörper können bereits im Werk des Herstellers der Ultraschallvorrichtung durch eine hochwertige Verbindung miteinander verbunden werden. Die Verbindung oder Verschweissung des Verteilkörpers mit dem Transportrahmen kann hingegen durch nicht-spezialisiertes Personal problemlos ausgeführt werden. Entlang der Anschlussseite des Verteilkörpers resultiert eine relativ lange, gegebenenfalls mehrfach unterbrochene Schweissnaht, die eine sichere Verbindung zwischen dem Verteilkörper und dem Transportrahmen gewährleistet. Selbst wenn ein Teil der Schweissnaht nicht optimal ausgeführt ist, gewährleistet die gesamte Schweissnaht die gewünschte Verbindungsqualität. Der mit dem Kopplungsstab verbundene Verteilkörper kann somit auch bei bereits installierten Anlagen bzw. Transportrahmen nachträglich durch nicht-spezialisiertes Personal installiert werden. Bestehende Anlagen können daher in einfacher Weise nachgerüstet werden.

Besonders vorteilhaft ist die Verwendung von Transportrahmen, die einstückig mit einem oder mehreren gegebenenfalls plattenförmigen Verteilkörpern verbunden sind. Die Transportrahmen können beispielsweise zusammen mit einem oder mehreren Verteilkörpern aus einem Stück Blech ausgestanzt und anschliessend gebogen werden. In diesem Falle resultiert eine optimale Verbindung zwischen den plattenförmigen Verteilkörpern und dem Transportrahmen. Eine Schweissverbindung zwischen dem Transportrahmen und dem Verteilkörper entfällt, weshalb die Transportvorrichtung mit reduziertem Aufwand und gleichzeitig verbesserten Eigenschaften hergestellt werden kann.

Der Transportrahmen kann mit beliebigen Tragvorrichtungen in beliebiger Weise verbunden werden. Der Transportrahmen kann verschraubt, verschweisst, oder durch Montageelemente formschlüssig mit der Tragvorrichtung verbunden werden.

Vorzugsweise wird der Transportrahmen durch eines oder mehrere nichtmetallische und/oder elastische Isolationselemente mit der Tragvorrichtung verbunden ist. Beispielsweise wird der Transportrahmen durch Schraubengarnituren aus Kunststoff mit der Tragvorrichtung verbunden. Zwischen der Tragvorrichtung und dem Transportrahmen können auch isolierende und/oder elastische Distanzelemente oder Halteelemente vorgesehen sein, die z.B. aus Kunststoff oder Naturgummi gefertigt werden. Der Transportrahmen kann vorteilhaft auch mittels isolierenden und gegebenenfalls elastischen Seilen an der Tragvorrichtung aufgehängt werden. Durch die Isolationselemente wird der Transportrahmen mechanisch und/oder elektrisch gegenüber der Tragvorrichtung isoliert. Mechanische Schwingungen, Vibrationen oder eingekoppelte Ultraschallschwingungen, werden daher nicht durch die Tragstruktur absorbiert. Der Transportrahmen bildet daher ein Schwingungssystem, welches nur gering gedämpft ist und mit relativ geringer Energiezufuhr eine optimale Wirkung entfaltet.

Ultraschallenergie kann über einen oder mehrere Kopplungsstäbe in einen Verteilkörper eingekoppelt werden. Ferner können mehrere Verteilkörper, denen über einen oder mehrere Kopplungsstäbe Ultraschallenergie zuführbar ist, mit einem Transportrahmen verbunden sein. Ultraschallenergie kann daher je nach Bedarf vorteilhaft auf den Transportrahmen übertragen werden. Die Ultraschallenergie kann nicht nur vorteilhaft über den Transportrahmen verteilt, sondern auch alternierend oder mit ausgewählter Intensität auf bestimmte Stellen des Transportrahmens übertragen werden. Die Einwirkung der Ultraschallenergie auf den Transportrahmen kann dabei wesentlich durch die Ausgestaltung des Verteilkörpers bestimmt werden.

Die Transportvorrichtung kann beliebige Transportrahmen aufweisen, die dem Transport von pulverförmigem oder körnigem Prozessmaterial dienen. Wie erwähnt können offene oder geschlossene Transportrahmen verwendet werden.

Der geschlossener Transportrahmen ist z.B. ein Rohr, ein Ring, ein Behälter, ein Trichter, ein Zylinder, durch die das Prozessmaterial hindurchtritt. Ein offener Transportrahmen ist z.B. ein Kanal, entlang dem das Prozessmaterial gefördert oder auf dem das Prozessmaterial bearbeitet wird. Der Kanal kann plattenförmig ausgestaltet sein oder z.B. ein U-förmiges oder V-förmiges Profil aufweisen, welches geeignet ist, das Prozessmaterial zu halten. Der Transportrahmen ist vorzugsweise in eine Prozessanlage integriert und daran angepasst.

Durch entsprechende Ausrichtung, Formgebung, Abmessungen und Gestaltung des Verteilkörpers resultiert ein entsprechender Verlauf der Einkopplung der Ultraschallenergie und eine entsprechende Einwirkung auf die Partikel des Prozessmaterials, welche kinetische Energie aufnehmen. Durch entsprechende Ausgestaltung des Verteilkörpers und/oder der Zufuhr von Ultraschallenergie über einen oder mehrere Kopplungsstäbe können daher verschiedene vorteilhafte Effekte erzielt werden.

Der Verteilkörper kann symmetrisch ausgebildet sein, sodass eine entsprechend gleichmässige Einkopplung der Ultraschallenergie entlang der Anschlussseite des Verteilkörpers erfolgt. Der Verteilkörper kann hingegen auch asymmetrisch ausgebildet sein, sodass die ein entsprechender Verlauf der Einkopplung von Ultraschallenergie entlang der Anschlussseite des Verteilkörpers resultiert. Der vorzugsweise bezüglich einer senkrecht zum Transportrahmen verlaufenden Achse asymmetrisch ausgebildete Verteilkörper ist vorzugsweise in die eine oder andere Richtung parallel oder geneigt zur Förderrichtung des Prozessmaterials ausgerichtet.

Die Anschlussseite und die Rückseite des Verteilkörpers können parallel zueinander oder geneigt zueinander verlaufen. Durch einen entsprechenden Verlauf der Rückseite des Verteilkörpers bzw. durch entsprechende asymmetrische Ausgestaltung des Verteilkörpers kann die Einkopplung entlang der Anschlussseite des Verteilkörpers beeinflusst werden.

Durch eine asymmetrische Formgebung des Verteilkörpers kann vorteilhaft auf die Partikel des Prozessmaterials eingewirkt werden, um diese gezielt in die eine oder andere Richtung in Bewegung zu versetzen.

Die Rückseite des Verteilkörpers kann auch relativ zur Anschlussseite des Verteilkörpers eine Wellenform aufweisen, sodass die Intensität der eingekoppelten Energie entlang der Anschlussseite des Verteilkörpers wellenförmig verläuft.

Eine besonders gute Einkopplung in den Transportrahmen erfolgt, wenn der Verteilkörper geneigt oder senkrecht zum Transportrahmen ausgerichtet ist.

Die Anschlussseite des Verteilkörpers ist vorzugsweise parallel oder geneigt zur Förderrichtung des Prozessmaterials ausgerichtet. Die Anschlussseite des Verteilkörpers verläuft in vorzugsweisen Ausgestaltungen gerade, sodass z.B. eine maximale Wirkung in Förderrichtung erzielt wird. Beispielsweise wird der Verteilkörper parallel zur Längsachse des Transportrahmens, beispielsweise eines Förderkanals, ausgerichtet. Der Verteilkörper weist in diesem Fall typischerweise eine ebene Oberfläche auf. Möglich ist auch die Realisierung einer Wellenform, die sich entlang einer Ebene erstreckt.

Insbesondere bei rohrförmigen oder zylinderförmigen Transportrahmen kann die Anschlussseite des Verteilkörpers auch entlang einer Kurve verlaufen. Beispielsweise wird wenigstens ein Verteilkörper vorgesehen, welche den Transportrahmen ganz oder teilweise als Kreissegment, Ringsegment, oder als Spirale umschliesst.

Erfindungsgemäß weist der Verteilkörper an der Anschlussseite durch Zwischenräume voneinander getrennte Kopplungsfinger auf. Die Kopplungsfinger können in der Grösse oder der Form oder in der Grösse und der Form gleiche oder unterschiedliche Abmessungen und Querschnitte aufweisen. Durch die Ausgestaltung der Kopplungsfinger können unterschiedliche Kopplungsgrade erzielt werden. Bei Kopplungsfingern mit grösserem Querschnitt wird eine stärkere Einkopplung von Ultraschallenergie an der betreffenden Position in den Transportrahmen erzielt. Bei kleineren Querschnitten reduziert sich der Kopplungsgrad entsprechend. Bei runden Querschnitten erfolgt eine eher zirkulare Einkopplung mit entsprechender Tiefenwirkung, während bei einem langgestreckten Querschnitt die Einkopplung von Ultraschallenergie über einen weiteren Bereich entlang dem Transportrahmen erfolgt.

Ein Verteilkörper, der peripher mit Kopplungsfingern versehen ist, kann auch vorteilhaft zur Verteilung von Ultraschallenergie auf mehrere Transportrahmen verwendet werden. Dabei wird wenigstens ein Kopplungsfinger des Verteilkörpers je mit einem Transportrahmen verbunden bzw. verschweisst.

Ein vorzugsweise symmetrisch ausgebildeter plattenförmiger Verteilkörper kann auch mehrere Flügel aufweisen, von denen jeder peripher wenigstens eine Anschlussseite aufweist. Der Verteilkörper weist beispielsweise die Flügelform eines Schmetterlings auf.

Weiterhin können mehrere Verteilkörper, die je über wenigstens einen Kopplungsstab und einen Ultraschallwandler mit einem Ultraschallgenerator verbunden sind, mit einem Transportrahmen verschweisst werden. Die Verteilkörper können auf gleicher oder unterschiedlicher Ebene mit dem Transportrahmen verschweisst werden, sodass in einer Ebene oder in einem Volumenabschnitt zwischen zwei Ebenen eine erwünschte Einwirkung von Ultraschallenergie erfolgt.

Durch die Einwirkung von Ultraschallenergie typischerweise im Frequenzbereich von 25 kHz bis 45 kHz auf den Transportrahmen und damit verbundene Funktionselemente, wie einen Siebbelag, werden die Partikel des Prozessmaterials in Bewegung versetzt, sodass sie leichter gefördert werden können. Aufgrund der eingeprägten Bewegungsenergie können die Partikel auch nicht am Transportrahmen oder den Funktionselementen anhaften und sich daran ablagern. Aufgrund der vorteilhaften Einkopplung mittels des Verteilkörpers kann die Ultraschallenergie breit verteilt auf den Transportrahmen und gegebenenfalls vorhandene Funktionseinheiten einwirken und die Ablagerung von Partikeln des Prozessmaterials nicht nur punktuell, sondern grossflächig verhindern.

Das Prozessmaterial wird durch den Transportrahmen oder auf dem Transportrahmen z.B. durch Schwerkraft oder durch ein z.B. gasförmiges Medium gefördert. Durch die Einwirkung der Ultraschallenergie wird der Durchsatz durch die Transportvorrichtung ohne Vergrösserung der Anlage oder Zufuhr höherer Leistung verbessert. Die in Bewegung versetzen Partikel des Prozessmaterials können leichter fliessen und Funktionselemente, wie einen Siebbelag, rascher durchdringen.

In bevorzugten Ausgestaltungen der Erfindung wird durch gezielte Abgabe von Ultraschallenergie und gegebenenfalls durch entsprechend ausgestaltete Verteilkörper gezielt auf die Partikel des Prozessmaterials eingewirkt, um diese nach Wunsch zu bewegen. Dabei können die Partikel in eine bestimmte Richtung bewegt werden, um diese zu verteilen oder dosiert abzugeben. Weiterhin können Partikel bewegt werden, um diese im Kreis zu bewegen und zu verwirbeln.

Die Ultraschallenergie wird vorzugsweise derart an den Transportrahmen abgegeben, dass Partikel des Prozessmaterials in eine bestimmte Richtung z.B. wahlweise in entgegengesetzte Richtungen vor oder zurück zu fördern. Das Prozessmaterial kann daher wahlweise an unterschiedlichen Stellen des Transportrahmens oder einer damit gehaltenen Funktionseinheit abgegeben werden. Das Prozessmaterial kann auch entlang einer Kurve geführt und gegebenenfalls zirkuliert werden. So ist es z.B. möglich, das Prozessmaterial entlang einem z.B. um bis zu 5° geneigten Kanal entgegen der Schwerkraft nach oben zu fördern. Dabei ist es möglich, mit Ultraschallenergie auf verschiedene Bereiche des Transportrahmens und der gegebenenfalls darin integrierten Funktionselementen einzuwirken. Das Prozessmaterial kann somit vorteilhaft gefördert werden, sodass z.B. ein gleichmässiger Partikelstrom resultiert.

Die Förderung von Partikeln des Prozessmaterials durch gezielte Zuführung von Ultraschallenergie erlaubt nicht nur die vorteilhafte Förderung des Prozessmaterials, sondern auch eine verbesserte Trennung, Siebung oder Mischung von Partikeln mit unterschiedlichen Eigenschaften, wie unterschiedlicher Grösse, unterschiedlicher Beschaffenheit oder unterschiedlichen Gewichts. Ferner kann die Filterung des Prozessmaterials in Filtereinheiten optimiert werden. Weiterhin gelingt eine präzise Dosierung, insbesondere in Kleinstmengen.

Nachfolgend wird die Erfindung anhand von Zeichnungen näher erläutert. Dabei zeigt:
- Fig. 1: eine erfindungsgemässe Transportvorrichtung 1 mit einem Sieb 2, welches einen Transportrahmen 6 aufweist, der einen rechteckigen Siebbelag 21 hält, der mit einer Ultraschallvorrichtung 8 und gelenkig mit vier Aktuatoren 31, 32, 33, 34 verbunden ist, die gelenkig mit einer Tragvorrichtung 10 verbunden sind und mittels denen das Sieb 2 innerhalb eines Arbeitsvolumens bewegt werden kann;
- Fig. 2a: eine erfindungsgemässe Transportvorrichtung 1 in einer prinzipiellen Ausgestaltung mit einer Ultraschallvorrichtung 8, die einen Ultraschallgenerator 80 aufweist, der über einen Ultraschallwandler 81 einen Kopplungsstab 82 und einen Verteilkörper 83 mit einem Transportrahmen 6 oder einem Teil davon verbunden ist;
- Fig. 2b: die Transportvorrichtung 1 von Fig. 2a mit einem Transportrahmen 6 in der Ausgestaltung eines nach oben geöffneten V-Profils, der als Fördererkanal dient;
- Fig. 2c: den Transportrahmen 6 von Fig. 2b beidseitig verschweisst mit einem Verteilkörper 83, der mehrfach gekrümmt ist und über den mittels mehrerer Kopplungsstäbe 82 Ultraschallenergie in den Transportrahmen 6 einkoppelbar ist;
- Fig. 2d: eine Transportvorrichtung 1 mit dem Transportrahmen 6 von Fig. 2b, der beidseitig mit antiparallel zueinander ausgerichteten und asymmetrisch ausgebildeten Verteilkörpern 83A, 83B verschweisst ist, über die gesteuert von einer Steuereinheit 100 wahlweise Ultraschallenergie in den Transportrahmen 6 einkoppelbar ist;
- Fig. 2e: eine Transportvorrichtung 1 mit dem Transportrahmen 6 von Fig. 2d, der beidseitig mit symmetrisch ausgebildeten plattenförmigen Verteilkörpern 83A, 83B einstückig verbunden ist, über die gesteuert von einer Steuereinheit 100 wahlweise Ultraschallenergie in den Transportrahmen 6 einkoppelbar ist und mit Isolationselementen 69, mittels denen der Transportrahmen 6 mit einer Tragvorrichtung 10 verbindbar ist;
- Fig. 2f: ein mit einem Kopplungsstab 82 verbundener Verteilkörper 83, der durch Zwischenräume 830 voneinander getrennte Kopplungsfinger 831A, 831B aufweist, die unterschiedlich ausgestaltet sind;
- Fig. 2g: den über den Kopplungsstab 82 mit einem Ultraschallwandler 18 verbundenen Verteilkörper 83 von Fig. 2f, der zur Durchleitung eines vorzugsweise flüssigen oder gasförmigen Mediums M dient, das durch eine Öffnung 820 im Kopplungsstab 82 oder durch den Ultraschallwandler 81 in den Kopplungsstab 82 eingeführt und über die Kopplungsfinger 831B abgegeben wird;
- Fig. 3: gerade ausgebildete Verteilkörper 83G, kreissegment-förmig ausgebildete Verteilkörper 83K und ein spiralförmig ausgestalteter Verteilkörper 83S, die je mit einem rohrförmigen oder zylinderförmigen Transportrahmen 6A, 6B, 6C verschweisst sind;
- Fig. 4: ein trichterförmiger Transportrahmen 6, an den ein Verteilkörper 83 angeschweisst ist;
- Fig. 5: eine erfindungsgemässe Transportvorrichtung 1 mit einem Transportrahmen 6 in der Ausgestaltung einer Düse zur dosierten Abgabe eines Prozessmaterials;
- Fig. 6: eine erfindungsgemässe Transportvorrichtung 1 mit einem ringförmigen oder zylinderförmigen Transportrahmen 6, in den ein Funktionselement bzw. ein Siebbelag 21 eingesetzt ist und der von einem ringförmigen Verteilkörper 83 umschlossen ist, in den über sechs gleichmässig voneinander beanstandete Kopplungsstäbe 82A, ..., 82F Ultraschallenergie in den Transportrahmen 6 und den Siebbelag 21 einkoppelbar ist;
- Fig. 7: ein rechteckiger Transportrahmen 6, in den ein Funktionselement bzw. ein Siebbelag 21 eingesetzt ist und der auf jeder Seite, auf unterschiedlichen Höhen, je mit einem Verteilkörper 83A, 83B, 83C, 83D verschweisst ist;
- Fig. 8: eine erfindungsgemässe Transportvorrichtung 1 mit einem Verteilkörper 83, der über eine Kopplungsvorrichtung 84 mit einem rohrförmigen Transportrahmen 6 verbunden ist;
- Fig. 9a: ein Verteilkörper 83, der durch Kopplungsfinger 831 mit vier zylindrischen Transportrahmen 6a, 6B, 6C, 6D verbunden ist, in die zylinderförmige Filtereinheiten 7 eingesetzt sind;
- Fig. 9b: den Verteilkörper 83 von Fig. 9a mit einem der Transportrahmen 6B;
- Fig. 10a: einen Verteilkörper 83 mit zwei Anschlussseiten 836, von denen jede mit zwei zylindrischen Transportrahmen 6a, 6B; 6C, 6D verbunden ist, die je einstückig aus einem Blech gefertigt sind;
- Fig. 10b: der Verteilkörper 83 von Fig. 10a, der die Form eines Schmetterlings mit zwei Flügeln aufweist, an denen peripher je eine Anschlussseite 836 vorgesehen ist; und
- Fig. 11: eine erfindungsgemässe Transportvorrichtung 1 mit einem Sieb 2 und einem Transportrahmen 6 gemäss Fig. 2e, der durch seilförmige Isolationselemente 69 an einer Tragvorrichtung 10 aufgehängt ist.

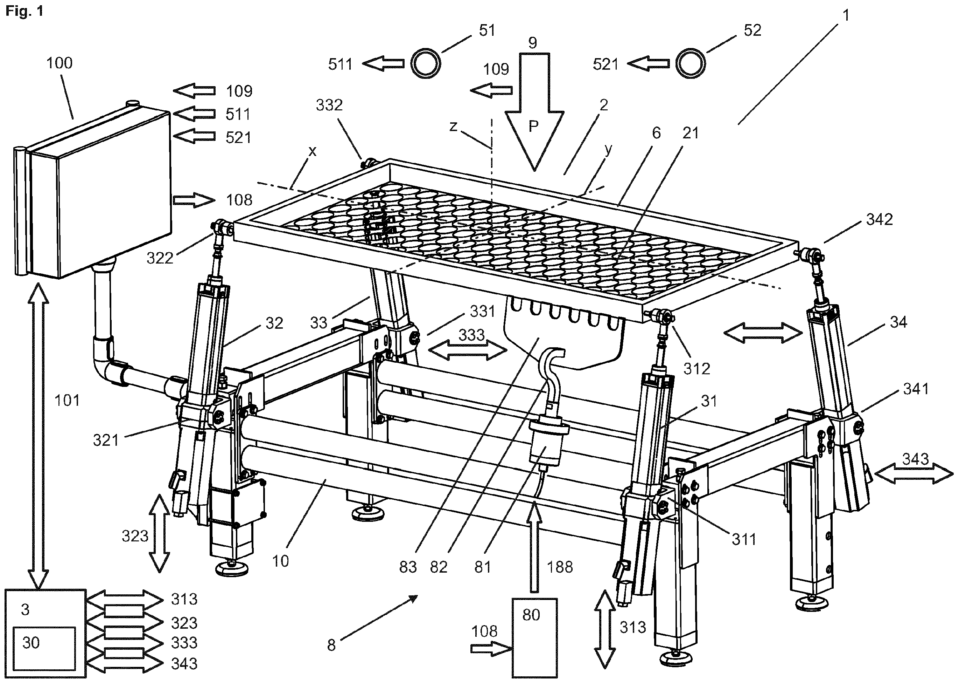

Fig. 1 zeigt eine erfindungsgemässe Transportvorrichtung 1 in einer vorzugsweisen Ausgestaltung mit einem Sieb 2, welches einen Transportrahmen 6 umfasst, der einen rechteckigen Siebbelag 21 hält und der durch Gelenke 312, 322, 332, 342 je mit einer Kolbenstange von vier Aktuatoren 31, 32, 33, 34 verbunden ist, die durch Gelenke 311, 321, 331, 341 mit einer Tragvorrichtung 10 verbunden sind. Die Tragvorrichtung 10 umfasst vier mit den Aktuatoren 31, 32, 33, 34 verbundene Säulen, die durch Querstreben miteinander verbunden sind.

Die Aktuatoren 31, 32, 33, 34 sind Teil einer Antriebsvorrichtung 3, welche zusätzlich Medienleitungen 313, 323, 333, 343 umfasst, über die z.B. elektrische Energie oder ein hydraulisches oder pneumatisches Medium von einer Quelle 30 zu den Aktuatoren 31, 32, 33, 34 übertragen werden kann.

Der Transportrahmen 6 ist zudem mit einer Ultraschallvorrichtung 8 verbunden, welche einen Ultraschallgenerator 80 aufweist, welcher Ultraschallenergie über einen Ultraschallwandler 81, einen Kopplungsstab 82 und einen Verteilkörper 83 auf den Transportrahmen 6 überträgt. Der Ultraschallgenerator 80 erzeugt elektrische Wechselspannungssignale im Ultraschallbereich von z.B. 25 kHz bis 45 kHz. Die Wechselspannungssignale werden im Ultraschallwandler 81 z.B. Piezoelementen zugeführt, die z.B. durch eine Kopplungsstange fest mit dem Kopplungsstab 82 verbunden sind. Die elektrischen Wechselspannungssignale werden durch die Piezoelemente in mechanische Schwingungen umgewandelt und über den Kopplungsstab 82 und den Verteilkörper 83 auf den Transportrahmen 6 übertragen.

Der Transportrahmen 6 ist rechteckig ausgebildet und derart angeordnet, dass das Prozessmaterial P durch diesen hindurch treten kann. Der Transportrahmen 2 hält ein Funktionselement, nämlich den Siebbelag 21. Der Siebbelag 21 ist vorzugsweise aus Metall gefertigt und mechanisch mit dem Transportrahmen 6 verbunden, vorzugsweise verschweisst. Auf den Transportrahmen 6 übertragene Ultraschallenergie kann daher in den Siebbelag 21 eindringen und dort auf das Prozessmaterial P einwirken.

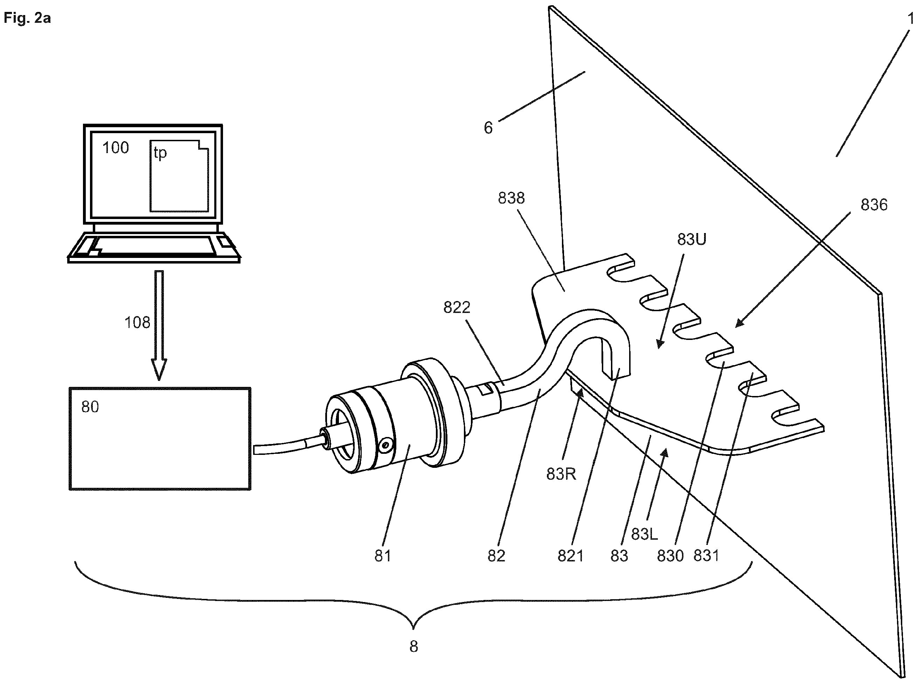

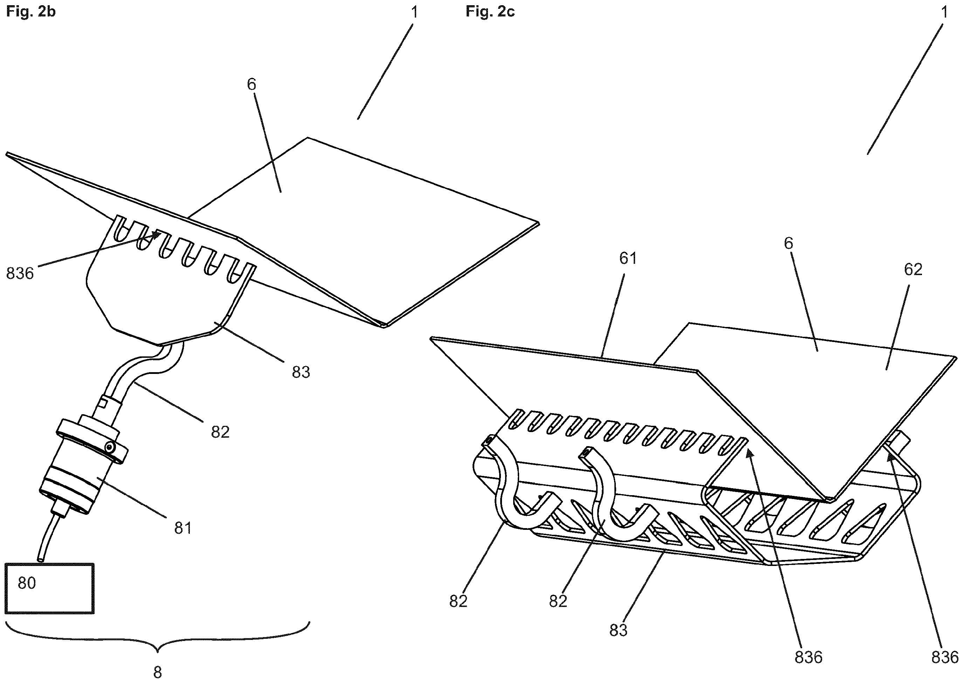

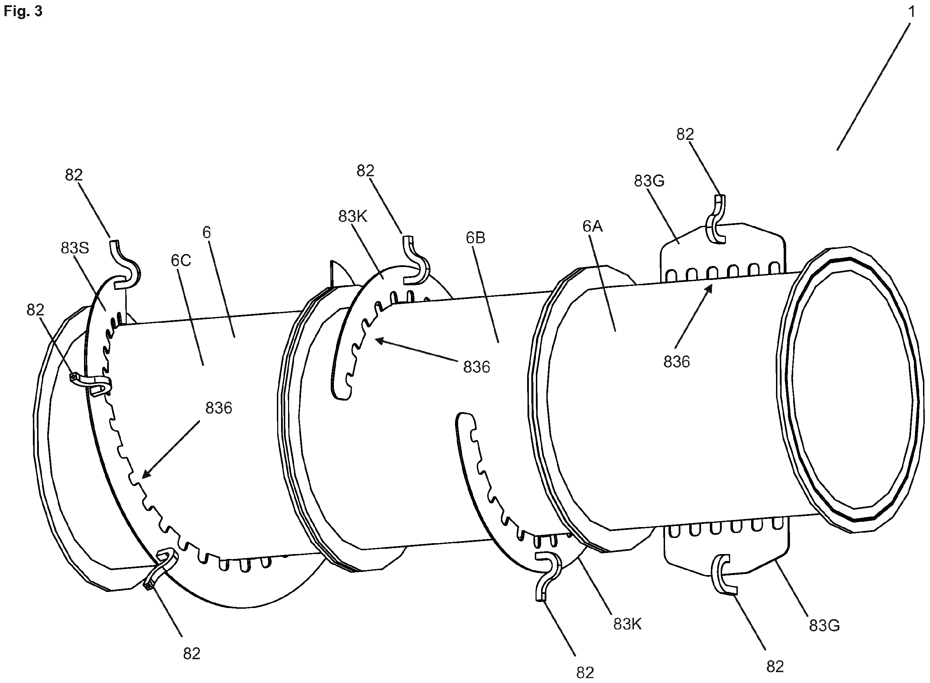

Die Abmessungen und Funktionen des Transportrahmens 6 werden entsprechend der Funktion der Transportvorrichtung 1 gewählt, die z.B. eine Zuführvorrichtung, eine Siebvorrichtung, eine Mischvorrichtung, oder eine Dosiervorrichtung sein kann. Alle diese Vorrichtungen umfassen einen entsprechend ausgestalteten Transportrahmen 6, durch den das Prozessmaterial hindurch geführt wird, oder auf dem das Prozessmaterial gelagert und/oder gefördert wird. In der Ausgestaltung von Fig. 1 umschliesst der Transportrahmen 6 einen Querschnitt, durch den das Prozessmaterial P hindurch geführt wird. Der Transportrahmen 6 kann den Transportweg hingegen auch nur an einer oder mehreren Seiten begrenzen, wie dies z.B. in den Figuren 2a und 2b gezeigt ist. Weiterhin kann der Transportrahmen 6 eine minimale Länge aufweisen, die z.B. für das Halten des Funktionselements, z.B. des Siebbelags 21, erforderlich ist. Alternativ kann sich der Transportrahmen 6 über grössere Distanzen von z.B. einigen Metern erstrecken, wie dies in Fig. 3 gezeigt ist.

Wesentlich ist, dass die Ultraschallenergie über den Transportrahmen 6 und gegebenenfalls wenigstens ein Funktionselement auf das Prozessmaterial P einwirken kann, um dieses in Bewegung zu versetzen und insbesondere auch eine Ablagerung am Transportrahmen 6 und an den optionalen Funktionselementen zu verhindern.

Das Prozessmaterial P ist ein pulverförmiges oder körniges Material, wie ein Pulver oder ein Granulat. Die Partikel des Pulvers oder Granulats können von gleicher oder unterschiedlicher Beschaffenheit sein. Das Prozessmaterial P kann eine oder mehrere Komponenten aufweisen. Beispielsweise wird ein aus mehreren Komponenten bestehendes Prozessmaterial P zugeführt in Komponenten aufgeteilt und/oder dosiert abgegeben. Es können auch mehrere Komponenten eines Prozessmaterials P getrennt zugeführt und gemischt und/oder dosiert abgegeben werden. Die Partikel des Prozessmaterials P können eine beliebige chemische oder pharmazeutische Zusammensetzung aufweisen.

Zur individuellen Ansteuerung der einzelnen Aktuatoren 31, 32, 33, 34 ist die Antriebsvorrichtung 3 über Kommunikationsleitungen, insbesondere Steuerleitungen 101 mit einer Steuereinheit 100 verbunden, in der ein Steuerrechner mit einem Betriebsprogramm vorgesehen ist. Über eine Steuerleitung 108 ist ferner der Ultraschallgenerator 80 steuerbar. Vorzugsweise ist der Ultraschallgenerator 80 derart ausgestaltet und steuerbar, dass Ultraschallsignale mit ausgewählten Frequenzen innerhalb des Ultraschallspektrums von z.B. 25 kHz bis 45 kHz selektiv abgegeben werden können. Die Frequenz soll gegebenenfalls umgetastet oder stetig geändert werden können, sodass stehende Wellen vermieden werden. Weiterhin soll die Ultraschallenergie wahlweise in Intervallen abgegeben werden können.

Der Steuereinheit 100 sind ferner Messsignale 511, 521 von Sensoren 51, 52 sowie Statussignale 109 einer Zuführvorrichtung 9 zuführbar(schematisch durch einen nach unten gerichteten Pfeil gezeigt), von der das Prozessmaterial P zum Siebbelag 21 gelangt. Die Sensoren 51 und 52 sind optische Sensoren, z.B. bildgebende Sensoren, mittels denen die Verteilung des Prozessmaterials P überwacht wird, das auf den Siebbelag 21 gelangt ist.

Von der Steuereinheit 100 gesteuert, kann das Sieb 2 mittels der Aktuatoren 31, 32, 33, 34, z.B. Linearantrieben mit einer Kolbenstange, innerhalb eines Arbeitsvolumens nahezu beliebige Bewegungen unterworfen werden. Das Sieb 2 kann wenigstens entlang seiner Transportachse x und/oder seiner Querachse y verschoben und/oder um eine vorzugsweise senkrecht zu diesen Achsen x, y stehende Drehachse z gedreht werden.

Die Aktuatoren 31, 32, 33, 34 sind vorzugsweise durch Kugelgelenke 312, 322, 332, 342; 311, 321, 331, 341 mit dem Transportrahmen 6 und der Tragvorrichtung 10 verbunden, die es erlauben, die Aktuatoren 31, 32, 33, 34 im erforderlichen Mass uneingeschränkt in beliebige Richtungen zu drehen. Beim Ausfahren der Kolbenstange eines der Aktuatoren 31, 32, 33, 34 können daher die weiteren Aktuatoren 31, 32, 33, 34 beliebig mitdrehen.

Durch die Aktuatoren 31, 32, 33, 34 erfolgt eine Grobverteilung. Durch Zufuhr von Ultraschallenergie wird diese Grobverteilung unterstützt und es erfolgt ergänzend eine Feinverteilung. Durch Einwirkung der Ultraschallenergie wird praktisch ein Luftkissen gebildet, durch das das Prozessmaterial P sich widerstandsfrei verteilen kann. Das Prozessmaterial P wird vom Transportrahmen 6 und vom Funktionselement bzw. Siebbelag 21 entkoppelt und kann daran nicht anhaften. Es entstehen daher keine Ablagerungen, welche einen Wartungsaufwand verursachen würden. Hingegen können Partikel entsprechender Grösse unter Einwirkung der Ultraschallenergie rasch durch den Siebbelag 21 hindurch treten.

Erfindungsgemässe Transportvorrichtungen 1 können somit, wie dies in Fig. 1 gezeigt ist, optional beliebige mechanische Antriebe umfassen und sind nicht auf die Zufuhr von Ultraschallenergie allein beschränkt. Hingegen genügt in vielen Fällen allein die erfindungsgemässe Zufuhr von Ultraschallenergie, um die erfindungsgemässen Vorteile zu realisieren.

Durch die Einkopplung über den Kopplungsstab 82 und den Verteilkörper 83, der mit dem Transportrahmen 6 verschweisst ist, wird die Ultraschallenergie nicht punktuell sondern entlang der Anschlussseite des Verteilkörpers 83 in den Transportrahmen 6 eingekoppelt. Probleme die bei der konventionellen punktuellen Einkopplung der Ultraschallenergie resultieren, werden vermieden. Auch bei der Einkopplung hoher Leistungen treten keine Beschädigungen der Verbindungsstelle auf. Wie oben beschrieben wurde, kann der Verteilkörper 83, der mit dem bereits angeschweissten Kopplungsstab 82 geliefert wird, in einfacher Weise mit dem Transportrahmen 6 verschweisst werden. Der Verteilkörper 83 wirkt als Transformator und koppelt Ultraschallwellen mit erhöhter Amplitude in den Transportrahmen ein.

Der Verteilkörper 83 kann von nicht-spezialisiertem Personal auch bei bereits installierten und in Betrieb stehenden Anlagen mit einem Transportrahmen 6, wie einem Rohr, ein Kanal, eine Behälter oder dergleichen, verschweisst werden. Punktuell auftretende hohe Temperaturen werden vermieden. Stattdessen wird die Wärmeenergie vorzugsweise über die gesamte Länge vom Transportrahmen 6 und vom Verteilkörper 83 aufgenommen.

Fig. 2a zeigt eine erfindungsgemässe Transportvorrichtung 1 in einer prinzipiellen Ausgestaltung mit einer Ultraschallvorrichtung 8, die einen Ultraschallgenerator 80 umfasst, der über einen Ultraschallwandler 81 einen Kopplungsstab 82 und einen Verteilkörper 83 mit einem Transportrahmen 6 oder einem Teil davon verbunden ist. Der Kopplungsstab 82 ist gebogen und steht mit seinem frontseitigen Endstück 821 senkrecht auf dem Verteilkörper 83, vorzugsweise einer Metallplatte und ist mit dieser verschweisst. Die Oberseite 83U des Verteilkörpers 83 bildet in diesem Fall eine Ankopplungsseite bzw. das Übergangsstück 838, an dem der Kopplungsstab 82 angeschweisst ist. Der Kopplungsstab 82 kann hingegen auch an die Unterseite 83L oder an eine Rückseite 83L des Verteilkörpers 83 angeschlossen werden, falls diese breit genug ist.

Das rückseitige Endstück 822 des Kopplungsstabs 82 ist mit dem Ultraschallkonverter 81 verbunden, welcher beispielsweise eine Kopplungsstange aufweist, die mit Piezoelementen gekoppelt ist. Zwischen den Piezoelementen sind Elektroden angeordnet, an die ein Wechselspannungssignal angelegt wird.

Der Verteilkörper 83 ist symmetrisch ausgebildet und weist eine Anschlussseite 836, eine Oberseite 83U und eine Unterseite 83L auf. Die Anschlussseite 836 umfasst sieben Kopplungsfinger, die durch U-förmige Ausnehmungen 830 voneinander getrennt sind. Die Kopplungsfinger 831 sind mit den Transportrahmen 6 verschweisst. Der Transportrahmen 6 ist symbolisch als Platte gezeigt und kann beliebig ausgestaltet sein, um ein Prozessmaterial P aufzunehmen und abzugeben. Der Transportrahmen 6 kann z.B. eine zumindest annähernd horizontal ausgerichtete Platte sein, auf die das Prozessmaterial P abgelegt wird, um dieses zu vermischen, zu trennen und/oder dosiert abzugeben.

Diese Vorgänge werden durch gezielte Zufuhr von Ultraschallenergie unterstützt. Dazu ist eine Steuereinheit 100 mit einem Steuerprogramm tp vorgesehen, mittels der Steuersignale 108 an den Ultraschallgenerator 80 abgegeben werden, um Ultraschalsignale mit gewünschter Frequenz und Amplitude, gegebenenfalls eine Sequenz von Ultraschallsignalen, oder ein Gemisch von Ultraschallsignalen abzugeben. Wie erwähnt werden die in den Verteilkörper 83 eingeführten Ultraschallsignale verstärkt und mit erhöhter Amplitude über die Anschlussseite des Verteilkörpers 83 an den Transportrahmen 6 abgegeben. Durch die Anordnung von Kopplungsfingern 831 und dazwischenliegenden Ausnehmungen 830 ist es möglich, nicht-einheitlich auf das Prozessmaterial P einzuwirken und dieses praktisch über die gesamte Länge des Transportrahmens 6 zu bewegen und zu verwirbeln.

Fig. 2b zeigt die Transportvorrichtung 1 von Fig. 2a mit einem als Kanal dienenden Transportrahmen 6 in der Ausgestaltung eines nach oben geöffneten V-Profils. Der Transportrahmen 6 ist vorzugsweise horizontal ausgerichtet oder leicht geneigt. Unter Ultraschalleinwirkung über einen weiten Bereich kann sich das Prozessmaterial P wie auf einem Luftkissen entlang dem Transportrahmen 6 bewegen. Der Transportrahmen 6 kann somit einen Transportkanal bilden, der beliebig verlaufen kann.

Fig. 2c zeigt den Transportrahmen 6 von Fig. 2b mit einem mehrfach gebogenen Verteilkörper 83. Der mit vier Krümmungskanten versehene Verteilkörper 83 ist an beiden Enden mit Anschlussseiten 836 mit dem Transportrahmen 6 bzw. je mit einer Seite 61, 62 des durch den Transportrahmen 6 gebildeten Kanals verbunden. Auf beiden Seiten ist der Verteilkörper 83 mit je zwei Kopplungsstäben 82 verschweisst, über die Ultraschallenergie mit hoher Leistung in den Transportrahmen 6 einkoppelbar ist.

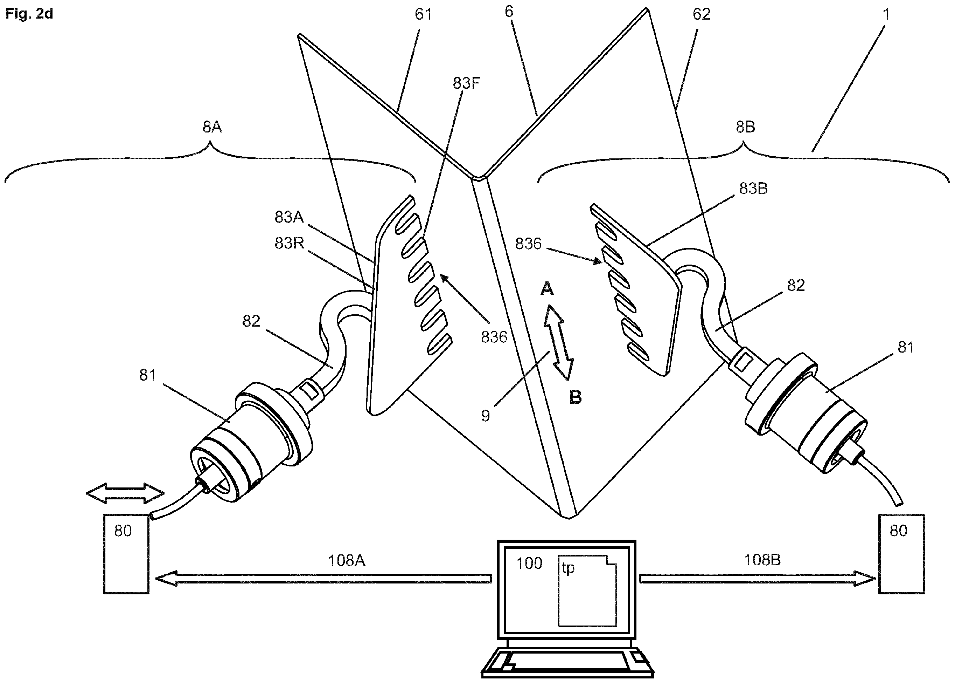

Fig. 2d zeigt den Transportrahmen 6 von Fig. 2b in der Ausgestaltung eines Kanals, der beidseitig mit antiparallel zueinander ausgerichteten und asymmetrisch ausgebildeten Verteilkörpern 83A, 83B verschweisst ist. Über die beiden Verteilkörper 83A, 83B, die je über einen Kopplungsstab 82 und einen Ultraschallkonverter 81 mit einem Ultraschallgenerator 80 verbunden sind, kann von einer Steuereinheit 100 gesteuert wahlweise über den einen Verteilkörper 83A oder den anderen Verteilkörper 83B oder gemeinsam über beide Verteilkörper 83A, 83B Ultraschallenergie beliebiger Frequenz und Amplitude in den Transportrahmen 6 eingekoppelt werden.

Durch die asymmetrische Ausgestaltung und antiparallele Ausrichtung der Verteilkörper 83A, 83B kann Ultraschallenergie mit entsprechenden Gradienten in den Transportrahmen 6 eingekoppelt werden. Entsprechend werden die Partikel des Prozessmaterials P unterschiedlich in Bewegung versetzt und beginnen je nach Art der Einkopplung sich in die eine oder andere Richtung zu bewegen. Sofern die Einkopplung antiparallel über beide Verteilkörper 83A, 83B erfolgt, so wird das Prozessmaterial P verwirbelt und entsprechend der Neigung des Transportrahmens 6 gefördert. Eine Bewegung in die eine oder andere Richtung ist hingegen auch möglich, wenn über die Verteilkörper 83A, 83B Ultraschallenergie mit unterschiedlicher Leistung eingekoppelt wird. In diesem Fall können eine Bewegung und gleichzeitig eine Verwirbelung erfolgen. Beispielsweise dient die Transportvorrichtung 1 als Mischvorrichtung.

Beispielsweise kann das Prozessmaterial P zuerst in die Richtung A und anschliessend in die Richtung B abgegeben werden. Durch die Art und den Wechsel der Einkopplung der Ultraschallenergie ist eine dosierte Abgabe des Prozessmaterials P in die eine oder andere Richtung möglich. Der Materialfluss kann in Gang gesetzt und auch wieder gestoppt werden. Durch die Intensität der Einkopplung kann die Stärke des Materialflusses gesteuert werden.

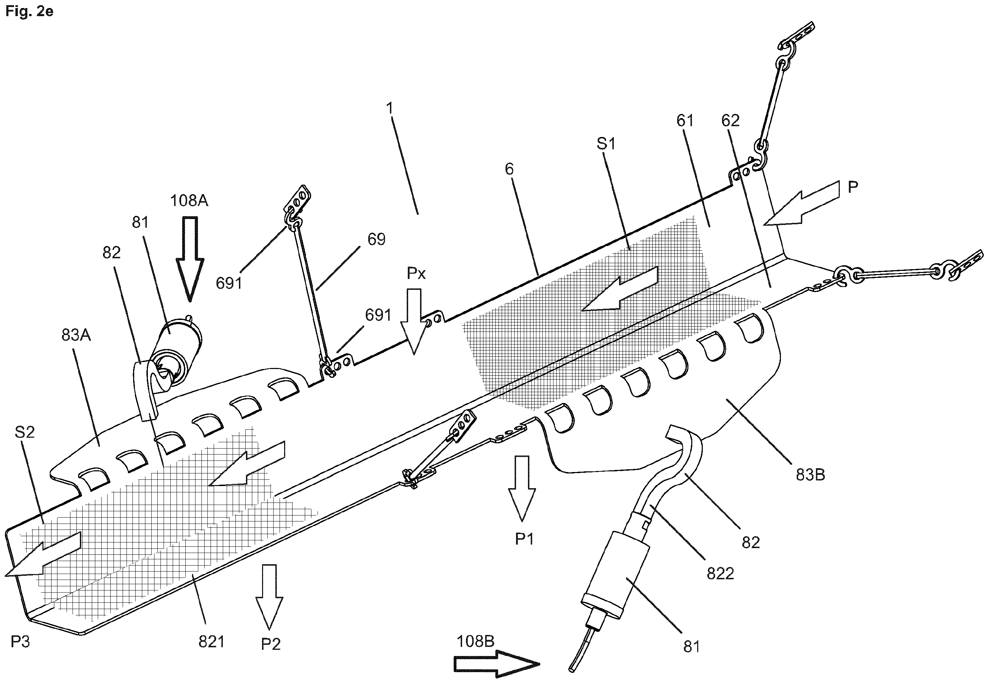

Fig. 2e zeigt den Transportrahmen 6 von Fig. 2d, der beidseitig mit symmetrisch ausgebildeten plattenförmigen Verteilkörpern 83A, 83B einstückig verbunden ist. Der Transportrahmen 6 wurde beispielsweise aus einem einzigen Stück Blech ausgeschnitten oder ausgestanzt und in die vorliegende Form gebogen. Die Verteilkörper 83A, 83B erlauben die optimale Einkopplung von Ultraschallenergie über mehrere Kopplungsfinger. Die Verteilkörper 83A, 83B können auch eine asymmetrische Form mit beliebiger Ausrichtung aufweisen, sodass alle Funktionen, die zu anderen Ausgestaltungen der Erfindung beschrieben sind, ebenfalls realisierbar sind. Umgekehrt können die Transportrahmen 6 aller weiteren Ausgestaltungen der Erfindung ebenfalls einstückig mit dem gegebenenfalls plattenförmigen Verteilkörper 83 verbunden sein.

Die Einkopplung von Ultraschallenergie in den Transportrahmen 6 erfolgt vorzugsweise wie z.B. in Fig. 2d beschrieben.

Exemplarisch ist gezeigt, dass der Transportrahmen 6 optional einen ersten und einen zweiten Siebbelag S1, S2 umfasst, die durch Öffnungen oder Bohrungen mit unterschiedlichen Durchmessern realisiert sind. Zwischen den beiden Siebbelägen S1, S2 ist optional eine Mischzone vorgesehen, innerhalb der ein weiteres Prozessgut Px zugeführt werden kann. Ein Prozessgut P kann daher gefördert, gesiebt oder in Anteile getrennt, vermischt oder mit zusätzlichem weiteren Prozessgut Px gemischt oder beaufschlagt, wiederum gesiebt oder getrennt und abgegeben werden. Aus dem zugeführten Prozessgut P resultieren somit abgetrennte Prozessgutanteile P1 und P2 und ein Prozessgutanteil P3, der am Ende des Transportrahmens 6 abgegeben wird. Mittels entsprechend ausgestalteter Transportrahmen 6 lassen sich daher zahlreiche Funktionen einzeln oder in Kombination miteinander realisieren.

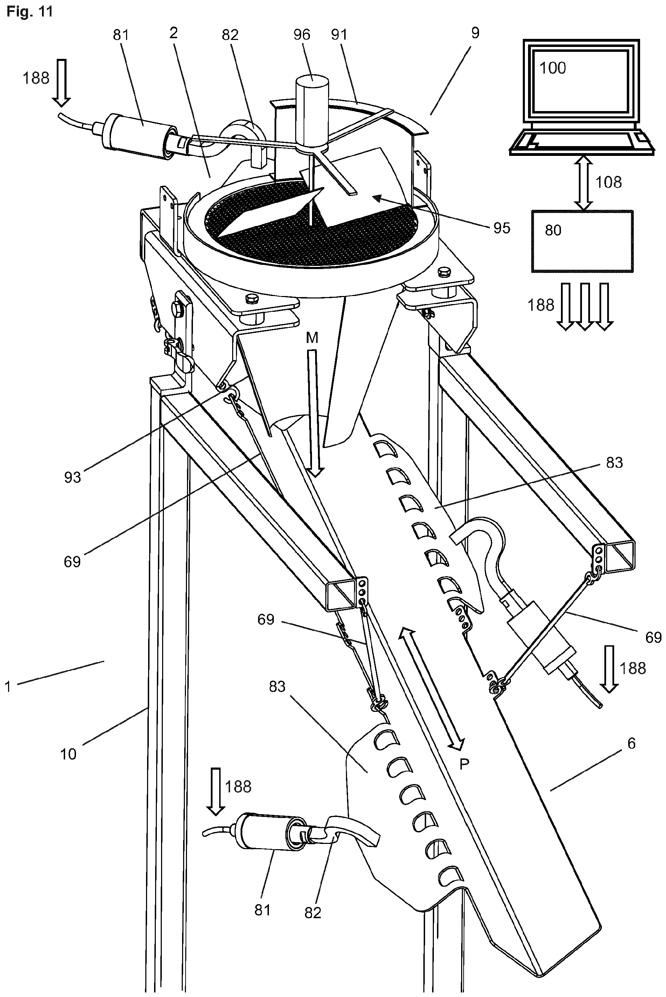

Der Transportrahmen 6 ist durch Montageelemente 691 mit vier seilförmigen Isolationselementen 69 verbunden, mittels denen der Transportrahmen 6 mit einer Tragvorrichtung 10 verbindbar ist. Der Transportrahmen 6 von Fig. 2d kann beispielsweise bei der Transportvorrichtung 1 von Fig. 11 eingesetzt werden.

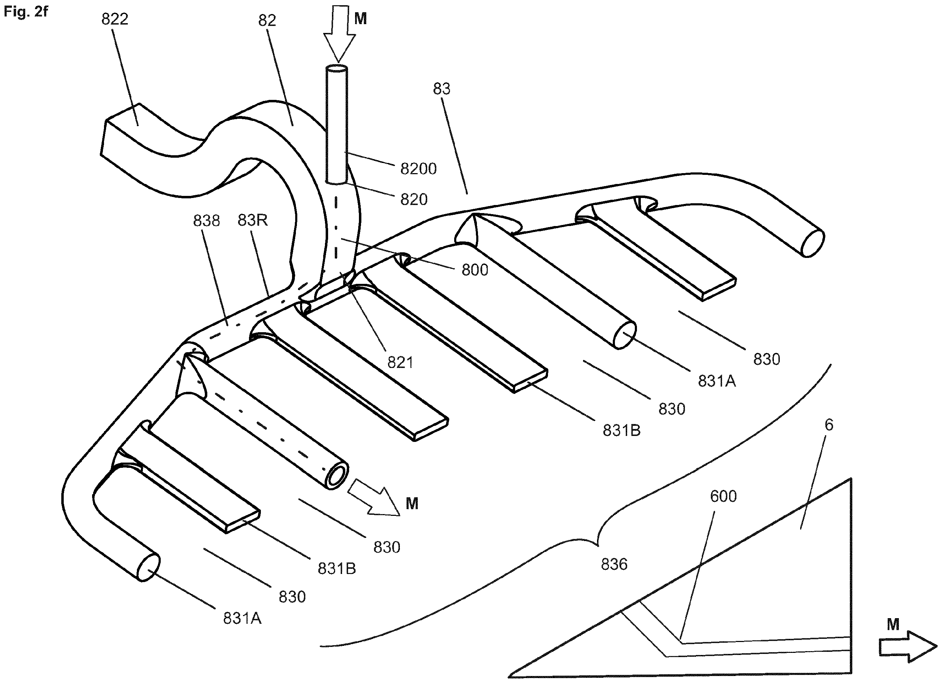

Fig. 2f zeigt einen mit einem Kopplungsstab 82 verbundenen Verteilkörper 83, der durch Zwischenräume 830 voneinander getrennte Kopplungsfinger 831A, 831B aufweist, die unterschiedlich ausgestaltet sind. Auf diese Weise kann ein beliebiges Muster der Einkopplung der Ultraschallenergie erzeugt werden, welches für den vorliegenden Prozess, z.B. Mischprozess, Trennprozess oder Förderprozess geeignet ist.

Fig. 2f zeigt ferner, dass der Kopplungsstab 82 auch auf der Rückseite 83R des Verteilkörpers 83 angeschweisst werden kann.

Weiterhin ist ersichtlich, dass die Anschlussseite 800 des Verteilkörpers 83 um ein Mehrfaches grösser ist als der Durchmesser des Kopplungsstabs 82. Dieses Verhältnis kann in einem beliebigen Bereich von beispielsweise 5 - 50 oder mehr, insbesondere 10-25 liegen.

Der Kopplungsstab 82 und der Transportrahmen 83 können massiv mit geschlossenen Querschnitten ausgebildet sein. Alternativ können der Kopplungsstab 82 und/oder der Verteilkörper 83 auch mit wenigstens einem Durchgangskanal oder Verteilkanal 800 versehen sein. Es können mehrere Verteilkanäle 800 vorgesehen sein, die miteinander verbunden sind oder voneinander getrennt voneinander verlaufen. In Fig. 2f ist ein optionaler Durchgangskanal oder Verteilkanal 800 gezeigt, der durch einen Teil des Kopplungsstabs 82 und durch einen Teil des Verteilkörpers 83 bis zu einem Kopplungsfinger 831B verläuft. An eine Anschlussöffnung 820 ist ein metallenes Anschlussrohr 8200 angeschlossen, durch das hindurch ein flüssiges oder gasförmiges Medium M eingeführt wird. Erfindungsgemässe Kopplungsstäbe 82 und/oder Verteilkörper 83 und/oder Transportrahmen 6 können daher mit einzelnen Kanälen oder mit einem Kanalsystem versehen werden, durch das auf den Transportrahmen 6 selbst oder das transportierte Prozessgut P eingewirkt wird. Fig. 2f zeigt exemplarisch einen Transportrahmen 6 mit einem beliebig geformten Verteilkanal 600, dem vom Verteilkörper 83 das Medium M zugeführt wird, dass innerhalb den Transportrahmen 6 bis zu einer Auslassöffnung verläuft und gegebenenfalls dem Prozessgut P zugeführt wird. Beim innerhalb des Transportrahmens 6 verlaufender Verteilkanal 600 kann auch mehrere Auslassöffnungen aufweisen, beispielsweise um ein Prozessgut P mit einer Flüssigkeit oder einem Feststoff zu vermischen oder zu verwirbeln. Ein gasförmiges Medium kann daher eine pulverförmige Substanz mitführen, die in das Prozessgut P eingemischt wird.

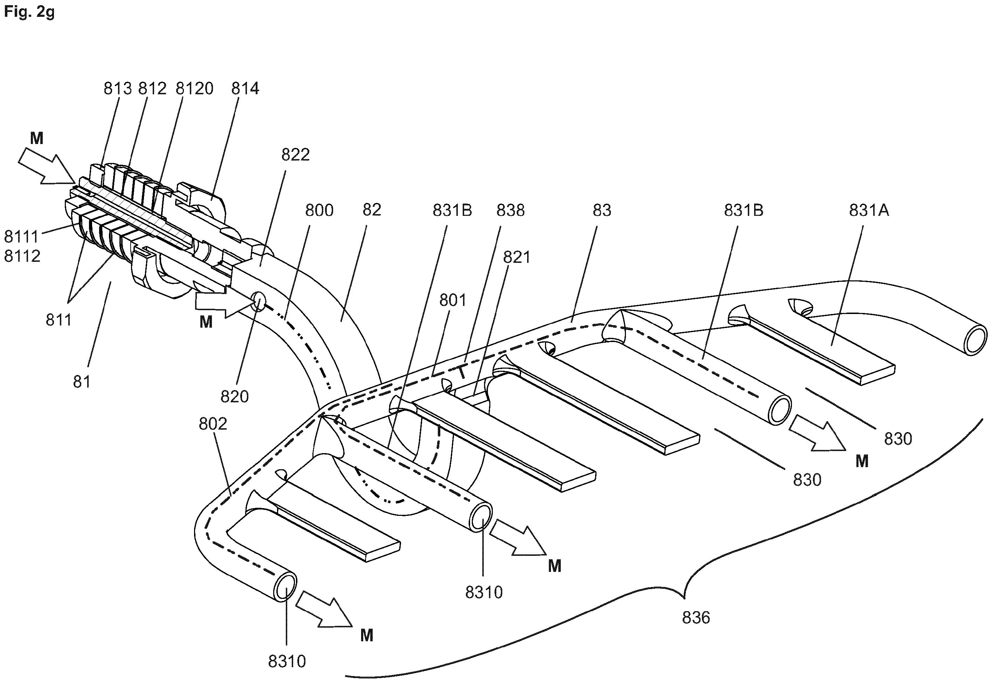

Fig. 2g zeigt den über den Kopplungsstab 82 mit einem Ultraschallwandler 18 verbundenen Verteilkörper 83 von Fig. 2f, der zur Durchleitung eines vorzugsweise flüssigen oder gasförmigen Mediums M dient und dazu ganz oder teilweise rohrförmig ausgebildet bzw. mit Verteilkanälen 800 versehen ist. Das Medium M, beispielsweise Luft, Gas oder eine Flüssigkeit, kann in der gezeigten Ausgestaltung, sofern vorgesehen, optional durch den Ultraschallwandler 18 und/oder, sofern vorgesehen, optional durch eine Öffnung 820 im Kopplungsstab 82 in den Kopplungsstab 82 eingeführt und durch Verteilkanäle 800 Verteilkörper 83 je zu einem Ausgang an einem oder mehrerer der Kopplungsfinger 831B geführt werden.

Erfindungsgemässe Verteilkörper 83 in vorzugsweisen Ausgestaltungen umfassen daher einen oder mehrere Verteilkanäle 800, durch den bzw. die wenigstens ein Medium M an und/oder in den Transportrahmen 6 übertragbar ist. Beispielsweise kann ein flüssiges Medium durch einen ersten Verteilkanal 800 dem Transportrahmen 6 zugeführt werden, um diesen zu kühlen. Ein zweites Medium M, ein Gas oder eine Flüssigkeit, kann beispielsweise in den Transportrahmen 6 eingeführt werden, um das geförderte Prozessgut P mechanisch oder chemisch zu beeinflussen. Das Prozessgut P kann durch das zugeführte Medium M beispielsweise verwirbelt, beaufschlagt oder vermischt werden.

Fig. 2g zeigt, dass das Medium M durch eine Öffnung 820 im Kopplungsstab 82 oder durch den Ultraschallwandler 81 in den Kopplungsstab 82 eingeführt und über die Kopplungsfinger 831B abgegeben wird. Einer der Verteilkanäle 800 ist strichpunktiert gezeigt.

Der Ultraschallwandler 81 umfasst ringförmig ausgebildete Piezoelemente 811, die auf eine Montagewelle 812 aufgesetzt und zwischen Flanschelementen 813, 814 eingespannt sind. Das Flanschelement 813 ist beispielsweise eine Schraubenmutter, die auf die Montagewelle 812 geschraubt wird. Zwischen den Piezoelementen 811 sind Kontaktscheiben 8111 und/oder Isolationsscheiben 8112 vorgesehen. Durch Anlegen von Wechselspannungen vorzugsweise im Ultraschallbereich an die Piezoelemente 811 werden diese zu mechanischen Schwingungen angeregt. Ultraschallschwingungen werden daher vom Ultraschallwandler 81 über den Kopplungsstab 82 und den Verteilkörper 83 auf den Transportrahmen 6 übertragen. Die Montagewelle 812 ist mit einem Transferkanal 8120 versehen, der die Montagewelle 812 und somit den Ultraschallwandler 81 axial durchläuft. Ein Medium M kann daher an den Eingang des Transferkanals 8120 angelegt und zum Eingang des rohrförmigen Kopplungsstabs 82 geführt werden.

In einer vorzugsweisen Ausgestaltung könnte daher ein erstes Medium M durch den Ultraschallwandler 81 zu einem ersten Kopplungsfinger 831B und ein zweites Medium M durch die Öffnung 820 im Kopplungsstab 82 zu einem zweiten Kopplungsfinger 831B geführt werden.

Verteilkanäle 800 können auch in plattenförmigen Verteilkörpern 83 vorteilhaft realisiert werden. Beispielsweise werden zwei zueinander komplementäre Metallplatten, die Kanalstrukturen aufweisen, derart miteinander verbunden, dass die Verteilkanäle 800 dazwischen eingeschlossen und beispielsweise mit einem Zugangskanal verbunden sind, der an einen Durchgangskanal des Kopplungsstabs 82 anschliesst.

Fig. 3 zeigt gerade ausgebildete Verteilkörper 83G, die mit einem ersten rohrförmigen Transportrahmen 6A verschweisst sind, kreissegment-förmig ausgebildete Verteilkörper 83K, die auf unterschiedlicher Höhe mit einem zweiten rohrförmigen Transportrahmen 6B verschweisst sind und einen spiralförmig ausgebildeten Verteilkörper 83S, der mit einem dritten rohrförmigen Transportrahmen 6C verschweisst ist. Der spiralförmig ausgestaltete Verteilkörper 83S ist mit mehreren Kopplungsstäben 82 verbunden und erlaubt es, Ultraschallenergie über die gesamte Länge und den gesamten Umfang in den dritten rohrförmigen Transportrahmen 6C einzukoppeln. Rohrförmige Transportrahmen 6 können beliebig mit z.B. gerade ausgebildeten Verteilkörpern 83G und/oder kreissegment-förmig ausgebildeten Verteilkörpern 83K und/oder spiralförmig ausgebildeten Verteilkörpern 83S verbunden werden.

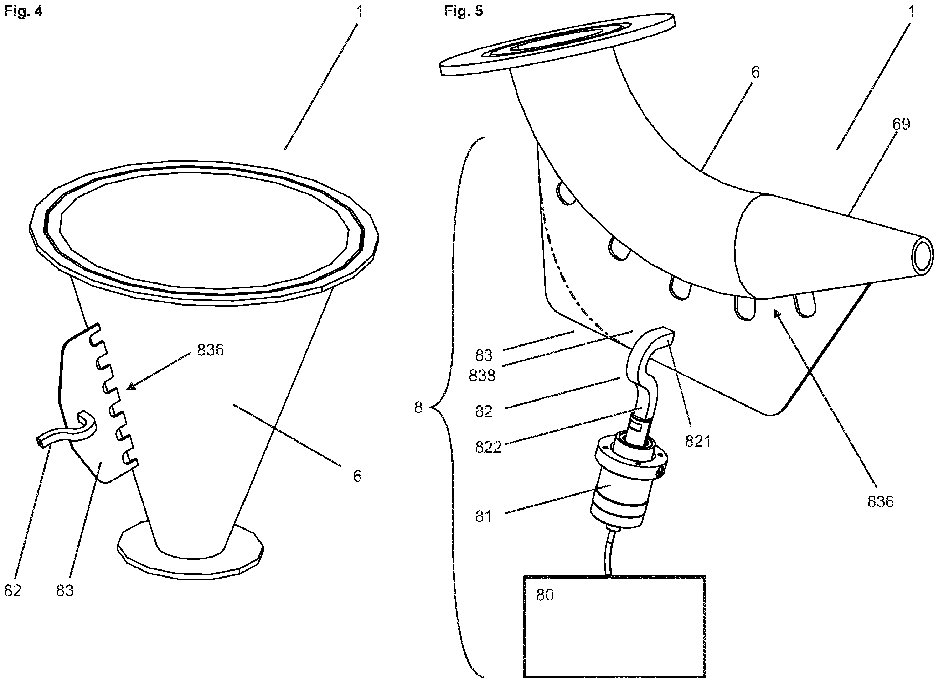

Fig. 4 zeigt eine Transportvorrichtung 1 mit einem trichterförmigen Transportrahmen 6, an den ein Verteilkörper 83 angeschweisst ist.

Fig. 5 zeigt eine erfindungsgemässe Transportvorrichtung 1 mit einem rohrförmigen Transportrahmen 6, an den eine leicht nach oben geneigte Düse 69 anschliesst. Unter Einwirkung von Ultraschallenergie kann das Prozessmaterial P dosiert durch die Düse 69 abgegeben werden. Dem Prozessmaterial P wird kinetische Energie eingeprägt, so dass es leicht nach oben wandern und aus der Düse 69 austreten kann. Durch eine strichpunktierte Linie ist gezeigt, dass der Verteilkörper 83 symmetrisch oder asymmetrisch ausgebildet sein kann.

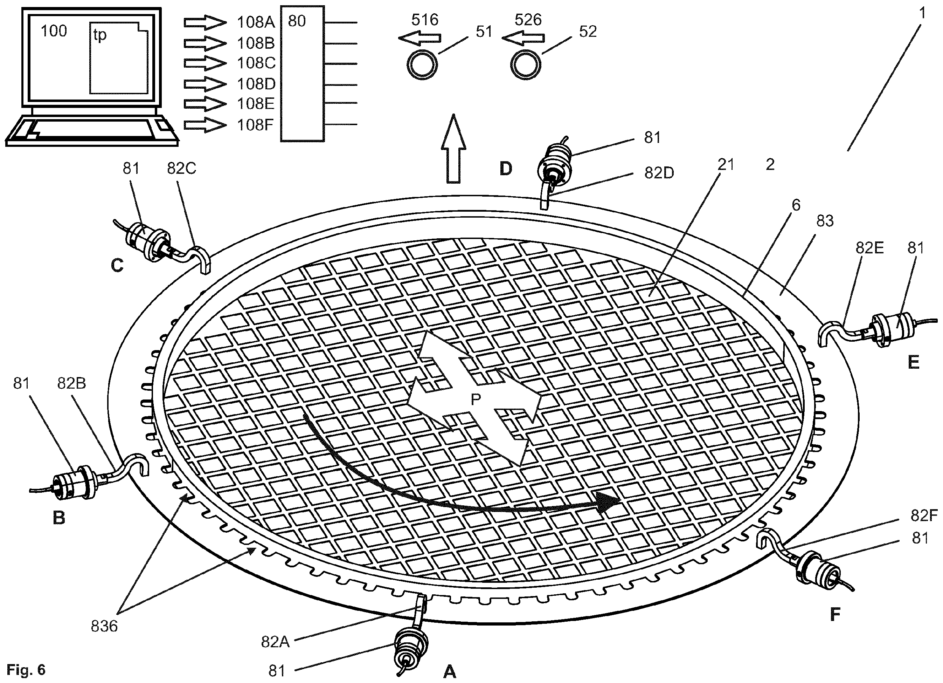

Fig. 6 zeigt eine erfindungsgemässe Transportvorrichtung 1 mit einem ringförmigen oder zylinderförmigen Transportrahmen 6, in den ein Funktionselement, d.h. ein Siebbelag 21 eingesetzt ist. Der Transportrahmen 6 ist von einem ringförmigen Verteilkörper 83 umschlossen, in den über sechs gleichmässig voneinander beanstandete Kopplungsstäbe 82A, ..., 82F Ultraschallenergie in den Transportrahmen 6 und den Siebbelag 21 einkoppelbar ist. Die Steuereinheit 100 gibt entsprechende Steuersignale 108A, 108B, 108C, 108D, 108E, 108F an den Ultraschallgenerator 80 ab, sodass Ultraschallenergie mit beliebigen Gradienten in den Transportrahmen 6 und den Siebbelag 21 eingeprägt werden kann. Über die Kopplungsstäbe 82A, ..., 82F können beliebige konstante oder sich beliebig ändernde und bewegende Energiemuster in den Siebbelag 21 eingeprägt werden.

Entsprechend diesen Energiegradienten und Energiemuster wandert und zirkuliert das Prozessmaterial P auf dem Siebbelag 21 in beliebig wählbare Richtungen. Die Bewegung des Prozessmaterials P kann durch optische Sensoren 51, 52 überwacht und an die Steuereinheit 100 zurückgemeldet werden, sodass die Steuereinheit 100 das Prozessmaterial P entsprechend seinem Programm tp bewegen und verschieben kann.

Die Einprägung von Ultraschallenergie, die entlang von Gradienten verläuft, ist daher nicht nur durch asymmetrische Ausgestaltung der Verteilkörper 83, sondern auch durch entsprechende Einkopplung von Ultraschallenergie über die Kopplungsstäbe 82A, ..., 82F möglich.

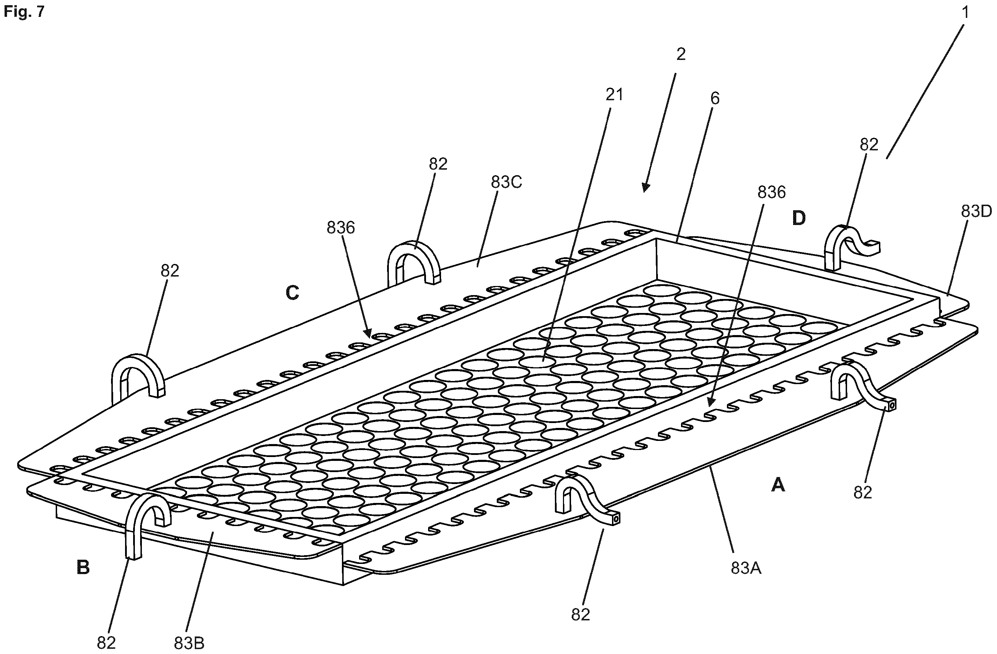

Fig. 7 zeigt einen rechteckigen Transportrahmen 6, in den ein Funktionselement bzw. ein Siebbelag 21 eingesetzt ist und der auf jeder Seite, auf unterschiedlichen Höhen, je mit einem Verteilkörper 83A, 83B, 83C, 83D verschweisst ist. Die längeren Verteilkörper 83A und 83C sind je mit zwei Kopplungsstäben 82 verschweisst. Die beiden kürzeren Verteilkörper 83B und 83D sind je mit nur einem Kopplungsstab 82 verschweisst.

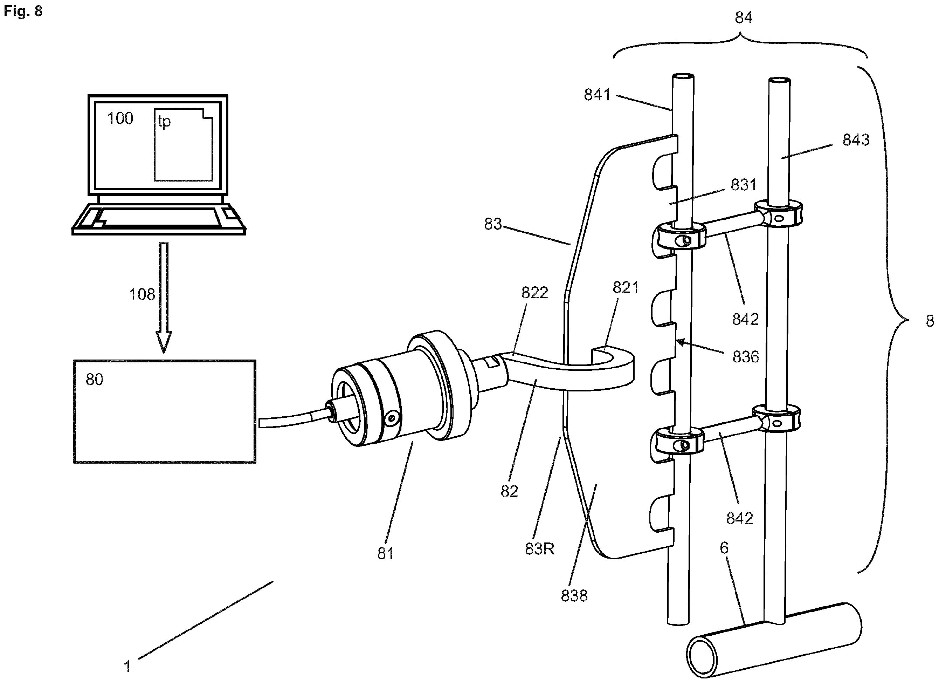

Fig. 8 zeigt eine erfindungsgemässe Transportvorrichtung 1 mit einem Verteilkörper 83, der über eine Kopplungsvorrichtung 84 mit einem rohrförmigen Transportrahmen 6 verbunden ist. Der Verteilkörper 83 koppelt Ultraschallenergie in eine Kopplungsstange 841 ein, von der Ultraschallenergie auf mehrere Transportrahmen 6 verteilt werden kann. Gezeigt ist ein rohrförmiger Transportrahmen 6, der mit einer Anschlussstange 843 verbunden ist, der über Transferstangen 842 Ultraschallenergie von der Kopplungsstange 841 zuführbar ist.

Durch eine oder mehrere Transferstangen 842 kann von der Kopplungsstange 841 somit Ultraschallenergie an mehrere Anschlussstangen 843 oder direkt an mehrere Transportrahmen 6 geführt werden. Durch die Abmessungen und Querschnitte der Transferstangen 842 kann der Energiefluss der Ultraschallenergie bedarfsweise eingestellt werden.

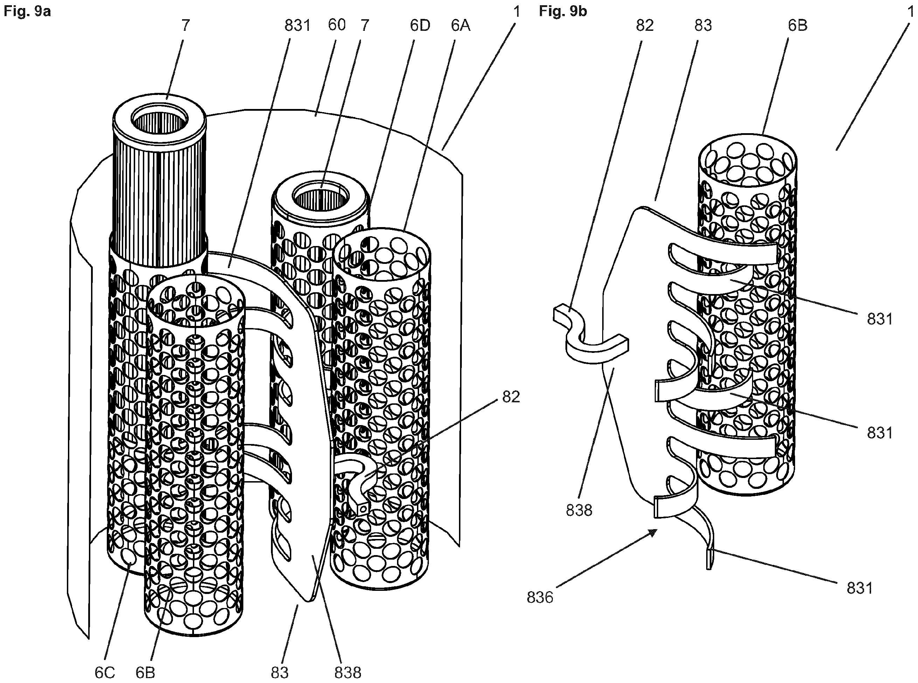

Fig. 9a zeigt einen Verteilkörper 83, der durch Kopplungsfinger 831 mit vier zylindrischen Transportrahmen 6a, 6B, 6C, 6D verbunden ist, in die zylinderförmige Filtereinheiten 7 eingesetzt sind. Durch die Kopplungsfinger 831, welche die Anschlussseite 836 des Verteilkörpers 83 bilden, kann Ultraschallenergie somit auf verschiedene Transportrahmen 6 übertragen werden. Eines der Filter 7 ist teilweise herausgezogen. In zwei der Transportrahmen 6a, 6B sind die Filter 7 noch nicht eingesetzt. Die Vorrichtung ist beispielsweise innerhalb eines Behälters 60 angeordnet.

Auch diese Ausgestaltung der Erfindung zeigt die Vorteile des Verteilkörpers 83, der es erlaubt Ultraschallenergie zu transformieren und vorteilhaft zu verteilen.

Fig. 9b zeigt den Verteilkörper 83 von Fig. 9a mit einem der Transportrahmen 6B.

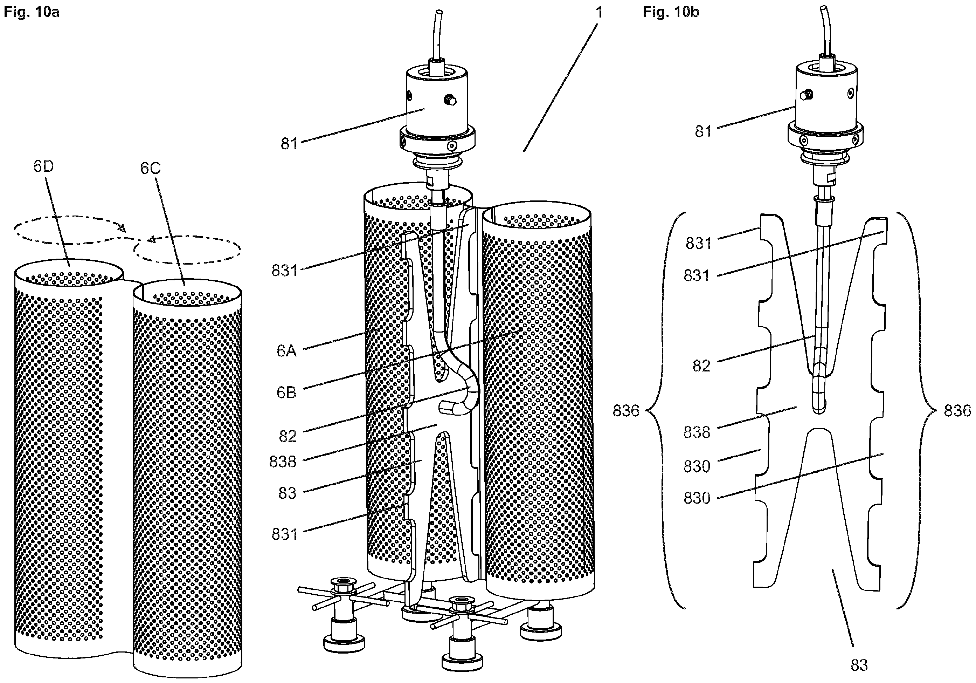

Fig. 10a zeigt einen Verteilkörper 83 mit zwei Anschlussseiten 836, von denen jede mit zwei zylindrischen Transportrahmen 6a, 6B; 6C, 6D verbunden ist, die je einstückig aus einem Blech gefertigt sind. Das Blech kann vorbearbeitet, z.B. mit Öffnungen versehen und anschliessend gebogen werden, um einen gewünschten z.B. runden, rechteckigen, dreieckigen oder polygonalen Querschnitt zu erhalten. Zwischen den beiden Transportrahmen 6a, 6B; 6C, 6D verbleibt ein Verbindungsstück, an das der Verteilkörper 83 angeschweisst werden kann.

Fig. 10b zeigt den Verteilkörper 83 von Fig. 10a, der die Form eines Schmetterlings mit zwei Flügeln aufweist, an denen peripher je eine Anschlussseite 836 vorgesehen ist. Der Verteilkörper 83 kann auch weitere Flügel aufweisen, die vorzugsweise gleiche Winkel zueinander einschliessen.

Der Kopplungsstab 82 ist an einem Übergangsstück 838 zwischen den beiden Flügeln angeschweisst und verläuft mit seinem Endstück senkrecht zur Frontseite oder Rückseite des plattenförmigen Verteilkörpers 83. Das an den Ultraschallwandler 81 angeschlossene Endstück des Kopplungsstabs 82 verläuft achsparallel in der Mitte zwischen den zylindrischen Transportrahmen 6a, 6B; 6C, 6D. Bei dieser Anordnung kann die Transportvorrichtung 1 axial in ein Rohr oder in einen Behälter 60 (siehe Fig. 9a) eingeführt werden. Die Kopplungsvorrichtung 1 kann daher beliebig an Aufnahmebehälter angepasst werden.

Fig. 11 zeigt eine erfindungsgemässe Transportvorrichtung 1 mit einem Transportrahmen 6 gemäss Fig. 2e, der durch die vier seilförmigen Isolationselemente 69 an einer Tragvorrichtung 10 aufgehängt ist. Der Transportrahmen 6 ist schwebend und isoliert von der Tragvorrichtung 10 gehalten und bildet dadurch ein kaum gedämpftes Schwingungssystem, über das das Prozessmaterial, das von einer Zuführvorrichtung 9 zugeführt wird, optimal weitertransportiert oder gefördert werden kann.

Durch vorzugsweise individuelle Ansteuerung der Ultraschallwandler 81 durch Signale 188, kann der Fördervorgang auf dem Transportrahmen 6 gesteuert und das Prozessmaterial P präzise dosiert abgegeben werden. Aufgrund der einstückigen Verbindung der gegebenenfalls plattenförmigen Verteilkörper 83 mit dem Transportrahmen 6 und der schwebenden Installation des Transportrahmens 6, der ein Schwingungssystem bildet, gelingt die gewünschte Behandlung des Prozessmaterials P bereits mit geringer Energiezufuhr. Durch entsprechende Ansteuerung kann gezielt auf das Prozessmaterial P eingewirkt werden, um dieses dosiert zu fördern und gegebenenfalls zu durchmischen.

Die oberhalb des Transportrahmens 6 angeordnete Zuführvorrichtung 9 umfasst einen Eingangskanal 91 und einen Ausgangskanal 93, die beide aufgeschnitten gezeigt sind und die ein dazwischen liegendes Sieb 2 einschliessen. Das Sieb 2 besteht aus einer gelochten Platte, die durch einen gekrümmten Kopplungsstab 82 mit einem Ultraschallwandler 81 verbunden ist. Innerhalb des Eingangskanals 91 ist ein von einem Motor 96 angetriebener Rotor 95 drehbar gehalten, der das Prozessmaterial P vorbearbeitet und/oder dem Sieb 2 zuführt.

## Patentansprüche

1. Transportvorrichtung (1) für den Transport von pulverförmigem oder körnigem Prozessmaterial (P) mit einem aus Metall gefertigten, offenen oder in sich geschlossenen Transportrahmen (6), der für den Transport des Prozessmaterials (P) vorgesehen ist, der von einer Tragvorrichtung (10) gehalten ist und der mit einer Ultraschallvorrichtung (8) verbunden ist, die einen Ultraschallgenerator (80), einen mit dem Ultraschallgenerator (80) verbundenen Ultraschallwandler (81) und einen mit dem Ultraschallwandler (81) verbundenen Kopplungsstab (82) umfasst, der ein frontseitiges Endstück (821) und ein rückseitiges Endstück (822) aufweist, und wobei ein aus Metall gefertigter flächiger Verteilkörper (83) vorgesehen ist, der eine Oberseite (83U), eine Unterseite (83L), eine Rückseite (83R) und peripher wenigstens eine Anschlussseite (836) aufweist, dass das rückseitige Endstück (822) des Kopplungsstabs (82) mit dem Ultraschallwandler (81) verbunden ist, **dadurch gekennzeichnet, dass** das frontseitige Endstück (821) des Kopplungsstabs (82) mit der Rückseite (83R), der Oberseite (83U) oder der Unterseite (83L) des Verteilkörpers (83) verschweisst ist, dass die wenigstens eine Anschlussseite (836) des Verteilkörpers (83) mit dem wenigstens einen Transportrahmen (6) einstückig verbunden oder verschweisst ist, und dass der Verteilkörper (83) an der Anschlussseite (836) durch Zwischenräume (830) voneinander getrennte Kopplungsfinger (831) aufweist, die gleiche oder unterschiedliche Querschnitte aufweisen..

2. Transportvorrichtung (1) nach Anspruch 1, **dadurch gekennzeichnet, dass** der Transportrahmen (6) ein Rohr, ein Ring, ein Behälter, ein Trichter, ein Zylinder, ein Kanal oder eine Platte ist und dass der der Verteilkörper (83) symmetrisch ausgebildet ist oder dass der Verteilkörper (83) symmetrisch oder asymmetrisch ausgebildet als Metallplatte oder Gitterplatte ausgebildet ist.

3. Transportvorrichtung (1) nach Anspruch 1 oder 2, **dadurch gekennzeichnet, dass** der Transportrahmen (6) wenigstens ein der Bearbeitung des Prozessmaterials (P) dienendes Funktionselement (21, 7), wie einen Siebbelag (21) oder ein Filter (7), umfasst oder hält.

4. Transportvorrichtung (1) nach einem der Ansprüche 1 - 3, **dadurch gekennzeichnet, dass** die Anschlussseite (836) des Verteilkörpers (83) an den Transportrahmen (6) anschliesst und dass der Verteilkörper (83) bezüglich einer senkrecht zum Transportrahmen (6) verlaufenden Achse symmetrisch oder asymmetrisch ausgebildet und in die eine oder andere Richtung parallel oder geneigt zur Förderrichtung des Prozessmaterials (P) ausgerichtet ist.

5. Transportvorrichtung (1) nach einem der Ansprüche 1 - 4, **dadurch gekennzeichnet, dass** der Verteilkörper (83) mit mehreren Transportrahmen (6A, 6B) verbunden ist, wobei wenigstens ein erster Kopplungsfinger (831) des Verteilkörpers (83) mit einem ersten Transportrahmen (6A) und ein zweiter Kopplungsfinger (831) mit einem zweiten Transportrahmen (6B) verschweisst ist.

6. Transportvorrichtung (1) nach einem der Ansprüche 1 - 5, **dadurch gekennzeichnet,**
**dass** der Verteilkörper (83) einen oder mehrere Verteilkanäle (800) aufweist, in den oder in die wenigstens ein Medium (M) direkt oder durch den Ultraschallwandler (81) einführbar und aus dem oder aus denen das Medium (M) an den Transportrahmen (6) oder an das im Transportrahmen (6) mitgeführte Prozessgut (P) abgebbar ist; oder
**dass** der Verteilkörper (83) und der Transportrahmen (6) einen oder mehrere Verteilkanäle (800; 600) aufweisen, in den oder in die wenigstens ein Medium (M) direkt oder durch den Ultraschallwandler (81) einführbar und aus dem oder aus denen das Medium (M) über eine oder mehrere Auslassöffnungen an den Transportrahmen (6) oder an das im Transportrahmen (6) mitgeführte Prozessgut (P) abgebbar ist.

7. Transportvorrichtung (1) nach einem der Ansprüche 1 - 6, **dadurch gekennzeichnet, dass** der Transportrahmen (6) durch eines oder mehrere nichtmetallische oder elastische oder nichtmetallische und elastische Isolationselemente (69) mit der Tragvorrichtung (10) verbunden ist.

8. Transportvorrichtung (1) nach einem der Ansprüche 1 - 7, **dadurch gekennzeichnet, dass** zwei zylindrische Transportrahmen (6A, 6b; 6C, 6D) einstückig aus einem Blech geformt sind, welches Blech zwischen den beiden Transportrahmen (6A, 6b; 6C, 6D) mit einer der Anschlussseiten (836) des Verteilkörpers (83) verschweisst ist.

9. Transportvorrichtung (1) nach einem der Ansprüche 1 - 8, **dadurch gekennzeichnet, dass** mehrere Verteilkörper (83), die je über wenigstens einen Kopplungsstab (81) und einen Ultraschallwandler (81) mit einem Ultraschallgenerator (80) verbunden sind, in der gleichen Ebene oder in unterschiedlichen Ebenen mit dem Transportrahmen (6) verschweisst sind oder dass ein Verteilkörper (83), der über wenigstens einen Kopplungsstab (81) und einen Ultraschallwandler (81) mit einem Ultraschallgenerator (80) verbunden ist, den Transportrahmen (6) als Kreissegment, Ringsegment, oder als Spirale zumindest teilweise umschliesst.

10. Transportvorrichtung (1) nach einem der Ansprüche 1 - 9, **dadurch gekennzeichnet, dass** der Verteilkörper (83) über eine Kopplungsvorrichtung (84) mit dem Transportrahmen (6) verbunden ist, welche Kopplungsvorrichtung (84) eine Kopplungsstange (841) umfasst, die mit dem Verteilkörper (83) verschweisst und durch wenigstens eine Transferstange (842) mit wenigstens einer Anschlussstange (843) verbunden ist, die mit dem zugehörigen Transportrahmen (6) verschweisst ist.

11. Betriebsverfahren zur Steuerung der Transportvorrichtung (1) für den Transport von pulverförmigem oder körnigem Prozessmaterial (P) nach einem der Ansprüche 1 - 10, mit einem aus Metall gefertigten Transportrahmen (6), der von einer Tragvorrichtung (10) gehalten und über wenigstens einen Verteilkörper (83) und wenigstens einen Kopplungsstab (82) und einen Ultraschallwandler (81) mit einem Ultraschallgenerator (80) verbunden ist und mit einer Steuereinheit (100), die ein Steuerprogramm (tp) aufweist und von der Steuersignale (108A, 108B) an den Ultraschallgenerator (80) abgegeben werden, um den Transportvorgang zu steuern.

12. Betriebsverfahren nach Anspruch 11, **dadurch gekennzeichnet, dass** der Ultraschallgenerator (80) derart gesteuert wird, dass jeweils einem von zwei asymmetrisch ausgebildeten Verteilkörpern (83A, 83B), die antiparallel ausgerichtet sind, Ultraschallenergie zugeführt wird, um das Prozessmaterial (P) in eine erste oder eine zweite Richtung zu transportieren.

13. Betriebsverfahren nach Anspruch 11 oder 12, **dadurch gekennzeichnet, dass** der Ultraschallgenerator (80) derart gesteuert wird, dass jeweils wenigstens über einen von mehreren Kopplungsstäben (82A, ..., 82F) und über wenigstens einen Verteilkörper (83) Ultraschallenergie dem Transportrahmen (6), der mit einem Siebbelag (21) versehen ist, derart zugeführt wird, dass das auf dem Siebbelag (21) gelagerte Prozessmaterial (P) in eine Richtung bewegt oder zirkuliert wird.

14. Betriebsverfahren nach Anspruch 11, 12 oder 13, **dadurch gekennzeichnet, dass** der Ultraschallgenerator (80) derart gesteuert wird, dass dem Transportrahmen (6) Ultraschallenergie über wenigstens einen Kopplungsstab (82) derart zugeführt wird, dass im Transportrahmen (6) gelagertes oder gefördertes Prozessmaterial (P) in einer gewünschten Dosierung abgegeben wird.

## Claims

1. Transport device (1) for the transport of pulverous or granular process material (P) with an open or in itself closed transport frame (6) made of metal, which is provided for the transport of the process material (P), which is held by a support device (10) and which is connected to an ultrasonic device (8) that comprises an ultrasonic generator (80), an ultrasonic transducer (81) connected to the ultrasonic generator (80) and a coupling rod (82), which is connected to the ultrasonic transducer (81) and which is having a front-sided end piece (821) and a rear-sided end piece (822), and wherein a flat distributor body (83) made of metal is provided, which has an upper side (83U), a lower side (83L), a rear side (83R) and peripherally at least one connection side (836), wherein the rear-sided end piece (822) of the coupling rod (82) is connected to the ultrasonic transducer (81) **characterised in that** the front-sided end piece (821) of the coupling rod (82) is welded to the rear side (83R), the upper side (83U) or the lower side (83L) of the distributor body (83), that the at least one connection side (836) of the distributor body (83) is integrally connected with or welded to the at least one transport frame (6) and that the distributor body (83) has coupling fingers (831) at the connection side (836) which are separated from one another by intermediate spaces (830) which coupling fingers (831) have identical or different cross sections.

2. Transport device (1) according to claim 1, **characterised in that** the transport frame (6) is a tube, a ring, a container, a funnel, a cylinder, a channel or a plate and that the distributor body (83) is symmetrically formed or that the distributor body (83) is symmetrically or asymmetrically formed as a metal plate or grid plate.

3. Transport device (1) according to claim 1 or 2, **characterised in that** the transport frame (6) comprises or holds at least one functional element (21, 7), such as a screen lining (21) or a filter (7) serving for processing the process material (P).

4. Transport device (1) according to one of the claims 1 - 3, **characterised in that** the connection side (836) of the distributor body (83) adjoins the transport frame (6) and that the distributor body (83) is formed symmetrical or asymmetrical with respect to an axis running perpendicular to the transport frame (6) and is aligned in one or the other direction parallel or inclined to the conveying direction of the process material (P).

5. Transport device (1) according to one of the claims 1 - 4, **characterised in that** the distributor body (83) is connected to a plurality of transport frames (6A, 6B), wherein at least a first coupling finger (831) of the distributor body (83) is welded to a first transport frame (6A) and a second coupling finger (831) is welded to a second transport frame (6B).

6. Transport device (1) according to one of the claims 1 - 5, **characterised in that** the distributor body (83) has one or more distribution channels (800) into which at least one medium (M) can be introduced directly or through the ultrasonic transducer (81) and from which the medium (M) can be delivered to the transport frame (6) or to the process material (P) carried in the transport frame (6); or
that the distributor body (83) and the transport frame (6) have one or more distribution channels (800; 600) into which at least one medium (M) can be introduced directly or through the ultrasonic transducer (81) and from which the medium (M) can be discharged via one or more outlet openings to the transport frame (6) or to the process material (P) carried in the transport frame (6).

7. Transport device (1) according to one of the claims 1 - 6, **characterised in that** the transport frame (6) is connected to the support device (10) by one or more non-metallic or elastic or non-metallic and elastic insulation elements (69).

8. Transport device (1) according to one of the claims 1 - 7, **characterised in that** two cylindrical transport frames (6A, 6b; 6C, 6D) are integrally formed from a metal sheet, which metal sheet is welded between the two transport frames (6A, 6b; 6C, 6D) to one of the connection sides (836) of the distributor body (83).

9. Transport device (1) according to one of the claims 1 - 8, **characterised in** several distribution bodies (83), which are each connected to an ultrasonic generator (80) via at least one coupling rod (81) and an ultrasonic transducer (81), are welded to the transport frame (6) in the same plane or in different planes, or that a distribution body (83), which is connected to an ultrasonic generator (80) via at least one coupling rod (81) and an ultrasonic transducer (81), at least partially encloses the transport frame (6) as a segment of a circle, segment of a ring or spiral.

10. Transport device (1) according to one of the claims 1 - 9, **characterised in that** the distributor body (83) is connected to the transport frame (6) via a coupling device (84), which coupling device (84) comprises a coupling bar (841), which is welded to the distributor body (83) and which is connected by at least one transfer bar (842) to at least one connection bar (843) welded to the associated transport frame (6).

11. Operating method for controlling the transport device (1) for the transport of pulverous or granular process material (P) according to one of the claims 1 - 10, with a transport frame (6) made of metal, which is held by a support device (10) and which is connected via at least one distributor body (83) and at least one coupling rod (82) and an ultrasonic transducer (81) to an ultrasonic generator (80), and with a control unit (100) which has a control program (tp) and from which control signals (108A, 108B) are output to the ultrasonic generator (80) in order to control the transport operation.

12. Operating method according to claim 11, **characterised in that** the ultrasonic generator (80) is controlled in such a way that ultrasonic energy is supplied to each of two asymmetrically formed distribution bodies (83A, 83B), which are aligned antiparallel, in order to transport the process material (P) in a first or a second direction.

13. Operating method according to claim 11 or 12, **characterised in that** the ultrasonic generator (80) is controlled in such a way that ultrasonic energy is supplied at least via one of a plurality of coupling rods (82A, ..., 82F) and via at least one distributor body (83) to the transport frame (6), which is provided with a screen lining (21) in such a way, that the process material (P) supported on the screen lining (21) is moved or circulated in one direction.

14. Operating method according to claim 11, 12 or 13, **characterised in that** the ultrasonic generator (80) is controlled in such a way that ultrasonic energy is supplied via at least one coupling rod (82) to the transport frame (6) in such a way that process material (P) stored or conveyed in the transport frame (6) is dispensed in a desired dosage.

## Revendications

1. Dispositif de transport (1) pour le transport de matériel de traitement (P) pulvérulent ou granuleux, avec un cadre de transport (6) ouvert ou fermé, fabriqué en métal, qui est prévu pour le transport du matériel de traitement (P), qui est maintenu par un dispositif de support (10) et qui est relié à un dispositif à ultrasons (8), qui comprend un générateur d'ultrasons (80), un transducteur à ultrasons (81) relié au générateur d'ultrasons (80) et une tige de couplage (82) reliée au transducteur à ultrasons (81), qui présente un embout situé à l'avant (821) et un embout situé à l'arrière (822), et qu'il est prévu un corps de distribution (83) plat fabriqué en métal, qui présente une face supérieure (83U), une face inférieure (83L), une face arrière (83R) et au moins une face de raccordement (836) sur sa périphérie, en ce que l'embout situé à l'arrière (822) de la tige de couplage (82) est relié au transducteur à ultrasons (81), **caractérisé en ce que** l'embout situé à l'avant (821) de la tige de couplage (82) est soudé à la face arrière (83R), à la face supérieure (83U) ou à la face inférieure (83L) du corps de distribution (83), **en ce que** le côté de raccordement (836) au moins présent du corps de distribution (83) est relié d'un seul tenant ou soudé au cadre de transport (6) au moins présent, et **en ce que** le corps de distribution (83) présente sur le côté de raccordement (836) des doigts d'accouplement (831) séparés les uns des autres par des espaces intermédiaires (830) et qui présentent des sections transversales identiques ou différentes.

2. Dispositif de transport (1) selon la revendication 1, **caractérisé en ce que** le cadre de transport (6) est un tube, un anneau, un container, un entonnoir, un cylindre, un canal ou une plaque et **en ce que** le corps de distribution (83) est symétrique ou **en ce que** le corps de distribution (83) est symétrique ou asymétrique et se présente sous la forme d'une plaque métallique ou d'une plaque grillagée.

3. Dispositif de transport (1) selon la revendication 1 ou 2, **caractérisé en ce que** le cadre de transport (6) comprend ou maintient au moins un élément fonctionnel (21, 7) servant au traitement du matériau de traitement (P), tel qu'un tamis (21) ou un filtre (7).

4. Dispositif de transport (1) selon l'une des revendications 1 à 3, **caractérisé en** que le côté de raccordement (836) du corps de distribution (83) se raccorde au cadre de transport (6) et que le corps de distribution (83) est conçu de manière symétrique ou asymétrique par rapport à un axe perpendiculaire au cadre de transport (6) et est orienté dans l'une ou l'autre direction, parallèlement ou en biais par rapport au sens de transport du matériau de traitement (P).

5. Dispositif de transport (1) selon l'une des revendications 1 à 4, **caractérisé en ce que** le corps de distribution (83) est relié à plusieurs cadres de transport (6A, 6B) , dont au moins un premier doigt d'accouplement (831) du corps de distribution (83) est soudé à un premier cadre de transport (6A) et un deuxième doigt d'accouplement (831) à un deuxième cadre de transport (6B).

6. Dispositif de transport (1) selon l'une des revendications 1 à 5, **caractérisé en**
que le corps de distribution (83) présente un ou plusieurs canaux de distribution (800) dans lesquels au moins un médium (M) peut être introduit directement ou par le transducteur à ultrasons (81) et à partir desquels le médium (M) peut être délivré au cadre de transport (6) ou à la matière de traitement (P) transportée dans le cadre de transport (6) ; ou
que le corps de distribution (83) et le cadre de transport (6) présentent un ou plusieurs canaux de distribution (800 ; 600), dans lequel ou dans lesquels au moins un fluide (M) peut être introduit directement ou par le transducteur à ultrasons (81) et à partir duquel ou desquels le fluide (M) peut être délivré par un ou plusieurs orifices de sortie au cadre de transport (6) ou à la matière de traitement (P) transportée dans le cadre de transport (6).

7. Dispositif de transport (1) selon l'une des revendications 1 à 6, **caractérisé en ce que** le cadre de transport (6) est relié au dispositif de support (10) par un ou plusieurs éléments isolants non métalliques ou élastiques ou non métalliques et élastiques (69).

8. Dispositif de transport (1) selon l'une des revendications 1 à 7, **caractérisé en ce que** deux cadres de transport cylindriques (6A, 6B ; 6C, 6D) sont formés d'une seule pièce à partir d'une tôle, laquelle tôle est soudée entre les deux cadres de transport (6A, 6B ; 6C, 6D) est soudée à l'un des côtés de raccordement (836) du corps de distribution (83).

9. Dispositif de transport (1) selon l'une des revendications 1 à 8, **caractérisé en ce que** plusieurs corps de distribution (83), qui sont chacun reliés à un générateur d'ultrasons (80) par au moins une tige de couplage (81) et un transducteur à ultrasons (81), sont soudés au cadre de transport (6) dans le même plan ou dans des plans différents, ou **en ce qu'**un corps de distribution (83), qui est relié à un générateur d'ultrasons (80) par au moins une tige de couplage (81) et un transducteur ultrasonore (81), entoure au moins partiellement le cadre de transport (6) sous la forme d'un segment de cercle, d'un segment d'anneau ou d'une spirale.

10. Dispositif de transport (1) selon l'une des revendications 1 à 9, **caractérisé en ce que** le corps de distribution (83) est relié au cadre de transport (6) par un dispositif d'accouplement (84), lequel dispositif d'accouplement (84) comprend une tige d'accouplement (841) qui est soudée au corps de distribution (83) et reliée par au moins une barre de transfert (842) à au moins une barre de raccordement (843) qui est soudée au cadre de transport (6) correspondant.

11. Procédé de commande du dispositif de transport (1) pour le transport de matériau de traitement (P) pulvérulent ou granuleux selon l'une des revendications 1 à 10, avec un cadre de transport (6) fabriqué en métal, qui est maintenu par un dispositif de support (10) et relié à un générateur d'ultrasons (80) par l'intermédiaire d'au moins un corps de distribution (83) et d'au moins une tige de couplage (82) et d'un transducteur à ultrasons (81), et avec une unité de commande (100) qui comporte un programme de commande (tp) et à partir de laquelle des signaux de commande (108A, 108B) sont transmis au générateur d'ultrasons (80) pour commander le processus de transport.

12. Procédé de commande selon la revendication 11, **caractérisé en ce que** le générateur d'ultrasons (80) est commandé de telle sorte que de l'énergie ultrasonore est fournie à l'un des deux corps de distribution (83A, 83B) de conception asymétrique et orientés de manière antiparallèle, afin de transporter le matériau de traitement (P) dans une première ou une seconde direction.

13. Procédé de commande selon la revendication 11 ou 12, **caractérisé en ce que** le générateur d'ultrasons (80) est commandé de telle sorte qu'au moins une énergie ultrasonore soit transmise au cadre de transport (6), qui est muni d'un revêtement de tamis (21), par l'intermédiaire d'au moins une des plusieurs barres de couplage (82A, ..., 82F) et par l'intermédiaire d'au moins un corps de distribution (83), de l'énergie ultrasonore est fournie au cadre de transport (6), qui est muni d'un revêtement de tamis (21), de telle sorte que le matériau de traitement (P) déposé sur le revêtement de tamis (21) est déplacé ou mis en circulation dans une direction.

14. Procédé de commande selon la revendication 11, 12 ou 13, **caractérisé en ce que** le générateur d'ultrasons (80) est commandé de telle sorte que l'énergie d'ultrasons est transmise au cadre de transport (6) par au moins une barre de couplage (82) de telle sorte que le matériau de traitement (P) stocké ou transporté dans le cadre de transport (6) est déchargé selon un dosage souhaité.
